# EUROPÄISCHE PATENTSCHRIFT

(11) **EP 1 493 723 B1**
(45) Veröffentlichungstag und Bekanntmachung des Hinweises auf die Patenterteilung: **17.03.2010**
(21) Anmeldenummer: 04014663.1
(22) Anmeldetag: 23.06.2004
(51) Int. Cl.: C04B 35/573, C04B 35/52, C04B 38/00

(54) **Verfahren zur Herstellung von Keramik**
Process for the production of ceramics
Procédé pour la fabrication des céramiques

(30) Priorität: 30.06.2003 DE 10329822
(43) Veröffentlichungstag der Anmeldung: 05.01.2005
(73) Patentinhaber: Deutsches Zentrum für Luft- und Raumfahrt e.V., 51147 Köln (DE)
(72) Erfinder: Gahr, Michaela, 97359 Schwarzach am Main (DE); Krenkel, Walter, Dr., 71272 Renningen (DE); Schmidt, Jens, Dr., 70374 Stuttgart (DE); Hofenauer, Andreas, 82223 Eichenau (DE); Treusch, Olaf, 80803 München (DE); Tröger, Fritz, 85778 Haimhausen (DE); Wegener, Gerd, Prof. Dr., 82166 Gräfelfing (DE); Fromm, Jörg, Prof. Dr., 82211 Herrsching (DE)
(74) Vertreter: Hoeger, Stellrecht & Partner Patentanwälte

(56) Entgegenhaltungen:
- EP-A- 1 219 578
- GB-A- 755 046
- GB-A- 901 176
- HOFFMANN C ET AL: "BIOMORPHIC SISIC CERAMIC COMPOSITES FROM PREPROCESSED BIOLOGICAL FIBERS" HIGH TEMPERATURE CERAMIC MATRIX COMPOSITES. INTERNATIONAL CONFERENCE ON HIGH TEMPERATURE CERAMIC COMPOSITES, XX, XX, 1. Oktober 2001 (2001-10-01), Seiten 407-413, XP009008446
- YOSHIMI OHZAWA ET AL.: "Relation between porosity and pore size or pressure drop of fibrous SiC filter prepared from carbonized cellulose-powder preforms" MATERIALS SCIENCE AND ENGINEERING A, Bd. 225, 1998, Seiten 33-38, XP002294152
- PATENT ABSTRACTS OF JAPAN Bd. 0102, Nr. 58 (C-370), 4. September 1986 (1986-09-04) -& JP 61 086411 A (FUJI ELECTRIC CO LTD), 1. Mai 1986 (1986-05-01)
- JUNMIN QIAN ET AL.: "Preparation of macroporous SiC from Si and wood powder using infiltration-reaction process" MATERIALS SCIENCE AND ENGINEERING A, Bd. 358, Oktober 2003 (2003-10), Seiten 304-309, XP002294153
- HOFENAUER A ET AL: "Dense reaction infiltrated silicon/silicon carbide ceramics derived from wood based composites" ADVANCED ENGINEERING MATERIALS WILEY-VCH VERLAG GMBH GERMANY, Bd. 5, Nr. 11, November 2003 (2003-11), Seiten 794-799, XP009035740 ISSN: 1438-1656

## Beschreibung

Die Erfindung betrifft ein Verfahren zur Herstellung von Strukturkeramiken und/oder Funktionskeramiken aus Slliziumcarbid-Keramik, bei welchem aus einem zellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstookörper durch Infiltration von Silizium umfassenden Materialien in eine Silizium umfassende Carbid-Keramik, insbesondere Siliziumcarbid-Keramik, umgewandelt.wird.

Aus der DE 199 47 731 ist ein Verfahren zur Herstellung von Strukturkeramiken und/oder Funktionskeramiken aus Siliziumcarbld-Keramik bekannt, bei welchem aus einem zellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silizium umfassenden Materialien insbesondere Silizium oder Silizium-Legierungen, in eine Silizium umfassende Carbid-Keramik, insbesondere Siliziumcarbid-Keramik, umgewandelt wird.

Darüber hinaus ist aus der DE 199 47 731 A1 auch ein derartiges Bauteil bekannt.

Bei dem bekannten Verfahren zum Herstellen von derartigen Bauteilen aus Strukturkeramik und/oder Funktionskeramik werden Holzbestandteile in Form von groben Spänen oder Furnierholzlagen unterschiedlicher Dicke eingesetzt.

Durch das Verpressen entsteht dabei zwar ein poröser Vorkörper, bei diesem sind jedoch aufgrund der Presstechnik ausgeprägte Dichtegradienten vorhanden.

Darüber hinaus ist auch eine Anisotropie dadurch zu verzeichnen, dass der Vorkörper in Randbereichen stärker verdichtet wird als in inneren Bereichen.

Insbesondere beim Schichtaufbau einzelner Holzfurnierlagen ist die Anisotropie extrem ausgeprägt.

Insgesamt weist der Vorkörper einen relativ inhomogenen Aufbau in allen Raumrichtungen auf, welcher wiederum dazu führt, dass während der Pyrolyse eine gleichmäßige Ableitung der Gase aus dem Vorkörper verhindert wird.

Darüber hinaus ist bei der Pyrolyse ein erheblicher Verzug nicht zu vermeiden.

Insgesamt ist das erhaltene Keramikgefüge grob strukturiert und weist neben Siliziumcarbid lokal auftretende Bereiche mit hohen Anreicherungen von Regtsilizium und Restkohlenstoff auf. Die Ursache hierfür ist ebenfalls in der Verwendung der groben Holzspäne und der Furnierlagen und der damit verbundenen intergranularen Hohlraumbildung zu sehen.

Folglich sind die durch das bekannte Verfahren hergestellten Strukturkeramiken und/oder Funktionskeramiken sowie die daraus erhältlichen Bauteile mit nur in geringem Maße reproduzierbaren Eigenschaften herstellbar.

Der Erfindung liegt daher die Aufgabe zugrunde, ein Verfahren der eingangs beschriebenen Art derart zu verbessern, dass die Strukturkeramiken und/oder Funktionskeramiken sowie die daraus hergestellten Bauteile mit möglichst reproduzierbaren Eigenschaften herstellbar sind.

Diese Aufgabe wird bei einem Verfahren der eingangs beschriebenen Art erfindungsgemäß dadurch gelöst, dass zur Herstellung des Vorkörpers als Ausgangsbestandteile mindestens zellulosehaltiges Pulver und Bindemittel verwendet werden, dass das zellulosehaltige Pulver von einer kapillaren Zellstruktur freie Partikel aufweist, dass die Ausgangsbestandtelle gemischt und ohne Härtung des Bindemittels zu dem Formkörper verpresst werden und dass dann der Formkörper In einer Presse auf eine Temperatur aufgeheizt wird, bei welcher eine Aushärtung des Bindemittels erfolgt.

Durch die Verwendung von zellulosehaltigern Pulver und Bindemittel zur Herstellung des Vorkörpers lässt sich der Vorkörper mit im wesentlichen homogener Dichte und Porosität herstellen und dadurch lassen sich dann auch die daraus hergestellten Strukturkeramiken und/oder Funktionskeramiken mit reproduzierbaren Eigenschaften herstellen.

Erfindungsgemäß erfolgt das Vorverpressen der Ausgangsbestandteile zu dem Formkörper ohne Härtung des Bindemittels, so dass eine im wesentlichen homogene Verdichtung des Formkörpers, insbesondere im wesentlichen ohne Ausbildung von Dichtegradienten, erreicht wird und dieser Formkörper wird dann auf eine Temperatur aufgeheizt, bei welcher die Aushärtung des Bindemittels erfolgt.

Besonders günstig ist es dabei, wenn die Ausgangsbestandteile eine Korngröße von kleiner als 300 µm, noch besser kleiner als 100 µm, noch besser kleiner als 50 µm aufweisen.

Besonders hinsichtlich des zellulosehaltigen Pulvers hat es sich als günstig erwiesen, wenn dieses eine Korngröße von weniger als 50 µm, noch besser weniger als 30 µm, aufweist.

Besonders vorteilhaft ist es dabei, wenn das zellulosehaltige Pulver von einer kapillaren Zellstruktur freie Partikel aufweist. Unter kapillarer Zellstruktur sind nur Strukturen mit vielen vollständig vorhandenen Zellen zu verstehen. D. h., daß das zellulosehaltige Pulver die übliche kapillare Zellstruktur von Holzspänen nicht mehr aufweist, sondern derart geringe Korngrößen hat, dass die kapillare Zellstruktur hinsichtlich ihrer Auswirkungen für das erfindungsgemäße Verfahren nicht mehr vorhanden ist, auf jeden Fall keinerlel Auswirkungen auf die Eigenschaften der Gesamtheit der Partikel im Vorkörper mehr hat. Das heißt, die Partikel können auch noch wenige Zellen umfassen, wobei die zwischen diesen wenigen Zellen vorhandenen Hohlräume keine Auswirkungen auf die Porosität des Vorkörpers haben.

Im Gegensatz zu der aus dem Stand der Technik bekannten Lösung wird somit bei diesem Ausführungsbeispiel der erfindungsgemäßen Lösung bewusst auf die Auswirkungen der kapillaren Zellstruktur des Holzes für die Silizierung verzichtet und insbesondere in dem Vorkörper eine Gefügestruktur geschaffen, deren Eigenschaften und Porosität primär durch das Mischungsvehältnis und die Korngröße des zellulosehaltigen Pulvers und des gegebenenfalls vorhandenen Bindemittels bedingt sind, jedoch nicht durch Eigenschaften und Struktur der Partikel selbst. Damit besteht die Möglichkeit, die Eigenschaften des Vorkörpers, insbesondere dessen Homogenität, exakt zu definieren und somit auch die Eigenschaften der Strukturkeramiken oder Funktionskeramiken reproduzieren zu können.

Das zellulosehaltige Pulver kann dabei in unterschiedlicher Art und Weise hergestellt werden. Beispielsweise ist es im einfachsten Fall denkbar, als zellulosehaltiges Pulver ausreichend feines Holzpulver zu verwenden.

Eine andere alternative Lösung sieht dabei vor, dass das zellulosehaltige Pulver frei von zellularen Strukturen ist, das heißt, keine vollständig vorhandenen Zellen mehr umfasst.

Im Fall von Holzpartikeln sind somit nur noch Zellwandbruckstücke vorhanden.

Alternativ zu Holzpartikeln umfasst ein derartiges zellulosehaltiges Pulver beispielsweise Zellulosepulver.

Prinzipiell ist der Vorkörper lediglich durch Verpressen des zellulosehaltigen Pulvers herstellbar.

Besonders günstig ist es, wenn als Ausgangsbestandteil noch Bindemittel zugesetzt wird.

Das als Ausgangsbestandteil verwendete Bindemittel könnte beispielsweise ein flüssiges Bindemittel sein, in welches das zellulosehaltige Pulver eingemischt wird. Um eine vorteilhafte und vollständige Durchmischung bei möglichst geringen Mischzeiten zu erhalten, ist es jedoch von Vorteil, wenn als Bindemittel trockenes Bindemittel verwendet wird, da sich dieses weit vorteilhafter mit zellulosehaltigern Pulver mischen lässt.

Besonders günstig ist es, wenn das trockene Bindemittel pulverförmig dem zellulosehaltigen Pulver zugesetzt wird.

Beispielsweise ist dabei vorgesehen, dass das pulverförmige Bindemittel eine Korngröße von kleiner 100 µm, noch besser kleiner 50 µm, noch besser kleiner 15 µm aufweist.

Das Bindemittel kann dabei aus unterschiedlichen Materialien, insbesondere unterschiedlichen Leimen oder Harzen sein.

Eine besonders günstige Lösung sieht vor, dass das Bindemittel Phenolharz umfasst.

Besonders gute Mischungsergebnisse zwischen dem zellulosehaltigen Pulver und dem Bindemittel sind dann erhältlich, wenn die Korngröße des zellulosehaltigen Pulvers und des Bindemittels in ungefähr der gleichen Größenordnung, d. h. innerhalb ungefähr der gleichen Zehnerpotenz liegen.

Besonders günstig ist es dabei, wenn die Korngröße des zellulosehaltigen Pulvers und des Bindemittels sich um maximal einen Faktor 3, noch besser sich nicht in der Größe unterscheiden.

Hinsichtlich der Ausgangsbestandteile bei dem erfindungsgemäßen Verfahren ist es denkbar, lediglich zellulosehaltiges Pulver und Bindemittel zu verwenden.

Es ist aber auch denkbar, als Ausgangsbestandteil noch mindestens ein Additiv zuzusetzen.

Mit einem derartig geeignet gewählten Additiv lassen sich die Eigenschaften der Strukturkeramik und/oder Funktionskeramik noch besser reproduzieren.

Das Additiv kann dabei grundsätzlich in unterschiedlichster Form zugesetzt werden.

Hinsichtlich der Vermischung hat es sich ebenfalls als besonders günstig erwiesen, wenn das Additiv pulverförmig ist.

Ferner ist vorzugsweise ebenfalls vorgesehen, dass das Additiv eine Korngröße aufweist, welche in der Größenordnung der Korngröße des zellulosehaltigen Pulvers liegt oder kleiner ist.

Noch besser ist es, wenn sich die Korngröße des mindestens einen Additivs und des zellulosehaltigen Pulvers maximal um einen Faktor 5 noch besser einen Faktor 3 unterscheiden.

Hinsichtlich der Art der Additive, die zugesetzt werden können, sind die unterschiedlichsten Lösungen denkbar.

So sieht eine vorteilhafte Lösung vor, dass das Additiv ein reaktives Additiv ist, d. h. ein Additiv, welches im Verlauf des Verfahrens der Herstellung der Strukturkeramik und/oder Funktionskeramik selbst reagiert.

Ein derartiges reaktives Additiv ist vorzugsweise Kohlenstoffpulver, welches beispielsweise in Form von Ruß und/oder Graphit und/oder Koks zugesetzt werden kann.

Alternativ zum Zusetzen eines reaktiven Additivs besteht auch die Möglichkeit, ein nicht reaktives Additiv zuzusetzen.

Beispielsweise sind derartige nicht reaktive Additive Carbide und/oder Boride und/oder Nitride und/oder Silizide und/oder Oxide.

Um die Eigenschaften der Strukturkeramik und/oder Funktionskeramik möglichst reproduzierbar erhalten zu können, ist vorzugsweise vorgesehen, dass bereits die Ausgangsbestandtelle trocken gemischt werden.

Vorzugsweise werden die Ausgangsbestandteile durch Mischen homogenisiert.

Um aus den Ausgangsbestandteilen einen Körper mit einer definierten Form herzustellen, ist vorzugsweise vorgesehen, dass die Ausgangsbestandteile in eine Form eingegeben werden.

Besonders günstig lässt sich dieses Verfahren dann realisieren, wenn die Ausgangsbestandteile trocken in die Form eingegeben werden, so dass der durch das Mischen homogenisierte Zustand der Ausgangsbestandteile erhalten bleiben kann.

Um eine möglichst homogene Struktur des Vorkörpers zu erhalten, ist vorzugsweise vorgesehen, dass die Ausgangsbestandteile zu einem Formkörper verpresst werden.

Dabei ist vorzugsweise eine Vorverdichtung der Ausgangsbestandteile zum Formkörper bei Pressdrücken von bis zu 15 MPa vorgesehen.

Im Wesentlichen erfolgt dieses Vorverpressen dabei ohne eine Erwärmung.

Vorzugsweise ist dabei ein Formkörper herstellbar mit einer Dichte, welche im Bereich von ungefähr 0,4 g/cm³ bis ungefähr 1,5 g/cm³. Noch besser ist es, wenn der Formkörper eine Dichte aufweist, welche im Bereich von ungefähr 0,65 g/cm³ bis ungefähr 1,0 g/cm³ liegt.

Zweckmäßigerweise erfolgt dabei das Aufheizen des Formkörpers derart, dass das Bindemittel im Wesentlichen vollständig aushärtet.

Beispielsweise erfolgt das Aushärten des Bindemittels bei Temperaturen bei 220°C und beispielsweise einem Druck von maximal 15 MPa.

Um einen Verzug des Formkörpers zu vermeiden, ist vorzugsweise vorgesehen, dass die Aufheizung des Formkörpers zur Aushärtung des Bindemittels in einer Presse erfolgt.

Hinsichtlich der Porosität des Vorkörpers ist vorzugsweise vorgesehen, dass der offenporöse Vorkörper eine mittlere Porosität aufweist, die im Bereich zwischen ungefähr 10 Vol.-% und ungefähr 70 Vol.-% liegt. Noch besser ist, wenn der offenporöse Vorkörper eine mittlere Porosität aufweist, die im Bereich zwischen ungefähr 20 Vol.-% und ungefähr 60 Vol.-% liegt.

Ein derart hergestellter Formkörper enthält meist Wassermoleküle die während der Aushärtung des BindemIttels entstehen.

Außerdem hat ein derart hergestellter Formkörper die Tendenz, Wasser aus der Umgebungsluft einzulagern.

Aus diesem Grund ist bei einer vorteilhaften Lösung des erfindungsgemäßen Verfahrens vorgesehen, dass der Vorkörper im Wesentlichen ohne Lagerungzeit nachdem Aushärten des Bindemittels pyrolysiert wird.

Eine andere Möglichkeit ist die, dass der Vorkörper nach dem Aushärten des Bindemittels feuchtigkeitsinert gelagert wird.

Eine derartige feuchtigkeitsinerte Lagerung des Vorkörpers sieht beispielsweise das luftdicht abgeschlossene Lagern des Vorkörpers nach dem Aushärten des Bindemittels vor.

Besonders günstig ist es dabei, wenn die luftdichte Lagerung durch Einschweißen des Vorkörpers in eine Folie durchgeführt wird.

Eine andere Möglichkeit besteht darin, dass der Vorkörper nach dem Aushärten des Bindemittels unter Inertgas gelagert wird.

Um die Feuchtigkeit aus dem Vorkörper zu entfernen, sieht eine weitere vorteilhafte Lösung des erfindungsgemäßen Verfahrens vor, dass der offenporöse Vorkörper vor der Pyrolyse getrocknet wird.

Eine derartige Trocknung könnte dabei in einem einstufigen Trocknungsverfahren erfolgen.

Um möglichst schonend zu trocknen, sieht eine Ausführungsform des erfindungsgemäßen Verfahrens vor, dass die Trocknung in mehreren Temperaturstufen erfolgt.

Vorzugsweise ist dabei vorgesehen, dass die Trocknungstemperatur in einer ersten Trocknungsstufe zwischen Raumtemperatur und maximal ungefähr 35°C liegt.

Eine weitere vorteilhafte Lösung sieht vor, dass die Trocknungstemperatur in einer zweiten Trocknungsstufe im Bereich zwischen ungefähr 35°C und maximal ungefähr 70°C liegt.

Eine weitere vorteilhafte Lösung sieht vor, dass die Trocknungstemperatur in einer dritten Trocknungsstufe zwischen ungefähr 70°C und maximal ungefähr 110°C liegt.

Um den Trocknungsvorgang möglichst schonend durchführen zu können, ist zweckmäßigerweise vorgesehen, dass die Aufheizgeschwindigkeit beim Trocknen maximal 10 Grad pro Minute beträgt.

Ferner ist vorzugsweise vorgesehen, dass die Haltezeit in einer Trocknungsstufe höchstens 20 Stunden beträgt.

Die Pyrolyse erfolgt unter Intertatmosphäre oder Vakuum.

Die Trocknung kann dabei vor der Pyrolyse als separater Verfahrensschritt erfolgen. Es ist aber auch denkbar, die Pyrolyse derart anzufahren, dass beispielsweise in einer ersten Pyrolysestufe eine Trocknung mit integriert ist.

Eine besonders günstige Lösung sieht vor, dass die Pyrolyse des Vorkörpers unter Stickstoffatmosphäre erfolgt.

Eine Möglichkeit sieht dabei vor, dass die Pyrolyse bei einem Stickstoffatmosphärendruck von mindestens 1000 mbar erfolgt.

Eine andere Möglichkeit sieht vor, dass die Pyrolyse des Vorkörpers bei einem Druck von weniger als 1000 mbar erfolgt.

Ferner kann die Pyrolyse in unterschiedlicher Weise ausgeführt werden.

Eine vorteilhafte Ausführungsform sieht vor, dass die Pyrolyse des Vorkörpers einstufig erfolgt.

In einem derartigen Fall ist dabei vorgesehen, dass bei der einstufigen Pyrolyse eine Aufheizung von Raumtemperatur bis maximal 1700°C erfolgt.

Ferner ist vorzugsweise vorgesehen, dass die einstufige Pyrolyse während einer Gesamtdauer von nicht mehr als 120 Stunden erfolgt.

Eine weitere vorteilhafte Lösung insbesondere im Hinblick auf eine vollständige Pyrolyse sieht vor, dass die Pyrolyse des Vorkörpers mindestens zweistufig erfolgt.

Beispielsweise ist dabei vorgesehen, dass in einer ersten Pyrolysestufe eine Aufheizung von Raumtemperatur auf maximal 900°C erfolgt.

Ferner sieht eine günstige Lösung vor, dass nach der ersten Pyrolysestufe eine Abkühlung auf Raumtemperatur erfolgt.

Die Gesamtdauer der Pyrolyse in der ersten Pyrolysestufe beträgt dabei vorzugsweise nicht mehr als 120 Stunden.

Ferner ist es zur Vervollständigung der Pyrolyse günstig, wenn die Pyrolyse in einer zweiten Pyrolysestufe eine Temperaturbehandlung von Raumtemperatur bis maximal 1700°C vorsieht.

Dabei ist insbesondere bei der zweiten Pyrolysestufe vorgesehen, dass der Ofenraum evakuiert wird und der Druck im Bereich zwischen ungefähr 0,1 mbar und ungefähr 10 mbar liegt.

Nach Beendigung der zweiten Pyrolysestufe ist vorzugsweise vorgesehen, dass eine Abkühlung auf Raumtemperatur erfolgt.

Besonders günstig ist es, bei der Pyrolyse bis zum Erreichen von ungefähr 400°C die Temperatur langsam, d. h. über einen Zeitraum von mindestens 10 Stunden, ansteigen zu lassen, um Rissbildungen so gering wie möglich zu halten.

Hinsichtlich der Porosität des bei der Pyrolyse entstehenden offenporösen Kohlenstoffkörpers werden vorzugsweise Werte zwischen ungefähr 30 Vol.-% bis ungefähr 80 Vol.-% erreicht. Noch besser ist es, wenn der offenporöse Kohlenstoffkörper eine Porosität aufweist, die im Bereich zwischen ungefähr 35 Vol.-% und ungefähr 70 Vol.-% liegt.

Besonders vorteilhaft ist die erfindungsgemäße Strukturkeramik und/oder Funktionskeramik dann herstellbar, wenn der Kohlenstoffkörper eine durchgängig offene insbesondere isotrope Porosität aufweist.

Ferner ist es für die Silizierung günstig, wenn der Kohlenstoffkörper im Wesentlichen richtungsunabhängige insbesondere Infiltrationseigenschaften für Silizium umfassende Materialien, insbesondere Silizium und Silizium-Legierungen, aufweist.

Um nach der Silizierung des Kohlenstoffkörpers eine Bearbeitung desselben weitgehend vermeiden zu können, ist vorzugsweise vorgesehen, dass der Kohlenstofflcörper in einer endkonturnahen Form hergestellt wird. Dies gilt insbesondere dann, wenn die herzustellende Strukturkeramik und/oder Funktionskeramik dem bei dem erfindungsgemäßen Verfahren herzustellenden Bauteil entspricht.

Alternativ dazu ist vorgesehen, dass der Kohlenstoffkörper als eine Teilform einer endkonturnahen Form hergestellt wird, d. h. dass aus mehreren bereits pyrolysierten Teilformen dann das gewünschte Bauteil dadurch hergestellt wird, dass die Teilformen miteinander verbunden und anschließend das gesamte Bauteil siliziert wird .

Die Silizierung könnte prinzipiell in beliebiger Art und Weise, beispielsweise auch mit Dampf erfolgen.

Als besonders geeignet hat es sich jedoch erwiesen, wenn die Silizierung in Form einer Flüssigsilizierung durchgeführt wird.

Vorzugsweise liegt die Temperatur bei einer derartigen Flüssigsilizierung oberhalb von 1400°C.

Ferner ist vorzugsweise vorgesehen, dass der Druck des Stickstoffs bei der Silizierung im Bereich zwischen ungefähr 0,01 mbar und ungefähr 10 mbar liegt.

Bei der Durchführung der Silizierung hat es sich als vorteilhaft erwiesen, wenn die Maximaltemperatur bei der Silizierung bis zu zwei Stunden gehalten wird.

Ferner ist es, beispielsweise um eine weitgehend durchkeramisierte Strukturkeramik und/oder Funktionskeramik zu erhalten, vorteilhaft, wenn bei der Silizierung mindestens ungefähr 200 % Silizium bezogen auf die Masse des Kohlenstoffkörpers angeboten werden.

Dabei wird zweckmäßigerweise bei der Silizierung ein Siliziumgranulat eingesetzt, dessen Korngröße zwischen ungefähr 0,1 mm und ungefähr 10 mm liegt.

Besonders günstig ist es dabei, wenn der silizierte Kohlenstoffkörper mit einer homogenen gradientenfreien, insbesondere isotropen Siliziumcarbid-Keramikstruktur hergestellt wird.

Darüber hinaus ist vorteilhafterweise vorgesehen, dass der silizierte Kohlenstoffkörper als eine im wesentlichen homogene, gradientenfreie, insbesondere isotrope, Silizium umfassende Carbid-Keramikstruktur, insbesondere Siliziumcarbid-Keramikstruktur, hergestellt wird.

Ein besonders günstiges Bauteil ist dann erhältlich, wenn die Siliziumcarbid-Keramik eine Dichte von mehr als 2,9 g/cm³ aufweist. Noch besser ist es, wenn die Dichte mehr als 3 g/cm³ beträgt.

Darüber hinaus ist mit dem erfindungsgemäßen Verfahren ein Bauteil aus Strukturkeramik und/oder Funktionskeramik herstellbar, umfassend einen mit Silizium umfassenden Materialien, insbesondere Silizium und Siliziumlegierungen, Infiltrierten und dadurch im wesentlichen zu Silizium umfassendem Carbid, insbesondere Siliziumcarbid, keramisierten Kohlenstoffkörper, gelöst, bei welchem der Kohlenstoffkörper eine durch Verwendung von mindestens zellulosehaltigern Pulver als Ausgangsbestandteil eine im Wesentlichen homogene Porenstruktur aufweist.

Der Vorteil dieser Lösung ist neben den vorstehend genannten Vorteilen auch darin zu sehen, dass durch das Bauteil selbst homogene und definierte Eigenschaften aufweist.

Besonders günstig ist es dabei, wenn der offenporige Kohlenstoffkörper eine Porosität aufweist, die im Bereich zwischen ungefähr 30 Vol.-% bis ungefähr 80 Vol.-% liegt.

Noch besser ist es, wenn der offenporöse Kohlenstoffkörper eine Porosität aufweist, die im Bereich zwischen ungefähr 35 Vol.-% und ungefähr 70 Vol.-% liegt.

Besonders zweckmäßig ist das erfindungsgemäße Bauteil dann, wenn der Kohlenstoffkörper eine im Wesentlichen durchgängige offene, isotrope Porosität aufweist.

Ferner ist es hinsichtlich der Härte des Bauteils von besonderem Vorteil, wenn der Kohlenstoffkörper im Wesentlichen richtungsunabhängig, insbesondere isotrop, von dem Silizium umfassenden Materialien infiltriert ist.

Um das erfindungsgemäße Bauteil besonders einfach herzustellen, ist vorzugsweise vorgesehen, dass der Kohlenstoffkörper eine endkonturnahe Form aufweist.

Alternativ ist dann, wenn das Bauteil selbst aus mehreren Teilen hergestellt werden soll, vorgesehen, dass der Kohlenstoffkörper eine Teilform einer endkonturnahen Form aufweist.

Mit dem erfindungsgemäßen Verfahren ist ferner auch ein Vorkörper herstellbar, der zur Herstellung von Strukturkeramik und/oder Funktionskeramik aus Silizium umfassender Carbid-Keramik, insbesondere Siliziumcarbid-Keramlk, durch Infiltration von Silizium umfassenden Materialien, insbesondere Silizium oder Siliziumlegierungen, in einen aus einem derartigen Vorkörper durch Pyrolyse hergestellten Kohienstofflcörper einsetzbar ist, wobei erfindungsgemäß der Vorkörper mindestens gebundenes zellulosehaltiges Pulver als Ausgangsbestandteil aufweist.

Besonders günstig ist es dabei, wenn die Ausgangsbestandteile eine Korngröße von kleiner als 300 µm, noch besser kleiner 100 µm und noch besser 50 µm aufweisen.

Dabei kann das zellulosehaltige Pulver unterschiedlichster Herkunft sein. Besonders günstig ist es, wenn das zellulosehaltige Pulver von einer kapillaren Zellstruktur freie Partikel aufweist.

Eine besonders vorteilhafte Art des zellulosehaltigen Pulvers sieht vor, dass dieses Holzpulver umfasst.

Alternativ zum Holzpulver ist vorgesehen, dass das zellulosehaltfge Pulver von zellularen Strukturen freie Partikel umfasst.

Eine besonders günstige Form der von zellularen Strukturen freien Partikel sind Zellulosepulverpartikel.

Prinzipiell könnte der Vorkörper lediglich durch Verpressen des zellulosehaltigen Pulvers hergestellt sein. Besonders günstig ist es jedoch, wenn als Ausgangsbestandteil ein Bindemittel zugesetzt ist.

Hinsichtlich des Bindemittels sind die unterschiedlichsten Lösungen denkbar. Vorteilhafterweise ist vorgesehen, dass dieses ein Phenolharz umfasst.

Da der erfindungsgemäße Vorkörper nicht nur durch zellulosehaltiges Pulver als Ausgangsbestandteil hergestellt werden kann, sieht eine weitere vorteilhafte Lösung vor, dass als Ausgangsbestandteil für die Herstellung des Vorkörpers dem zellulosehaltigen Pulver mindestens ein Additiv zugesetzt ist.

Vorzugsweise ist auch dieses Additiv pulverförmig und hat eine Korngröße in einer geeigneten Größe. Besonders günstig ist es, wenn das Additiv eine Korngröße aufweist, welche in der Größenordnung der Korngröße des zellulosehaltigen Pulvers liegt oder kleiner ist. Noch günstiger ist es, wenn die Korngröße des mindestens einen Additivs und des zellulosehaltigen Pulvers sich maximal um einen Faktor 5 noch besser maximal einen Faktor 3 unterscheiden.

Das Additiv kann in unterschiedlichster Art und Weise gewählt werden. Eine Möglichkeit sieht vor, ein reaktives Additiv zu wählen, eine andere Möglichkeit, ein nicht reaktives Additiv.

Vorzugsweise hat dabei der offenporöse Vorkörper eine mittlere Porosität, die im Bereich zwischen ungefähr 10 Vol.-% und ungefähr 70 Vol.-%, noch besser zwischen ungefähr 20 Vol.-% und ungefähr 60 Vol.-% liegt.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Figur 1: eine schematische Darstellung von ersten Verfahrensschritten bei einem ersten Ausführungsbeispiel eines erfindungs- gemäßen Verfahrens;
- Figur 2: eine schematische Darstellung eines Pressens eines Form- körpers bei dem ersten Ausführungsbeispiel des erfindungs- gemäßen Verfahrens;
- Figur 3: eine Darstellung eines Dichteprofils bei dem ersten Aus- führungsbeispiel des erfindungsgemäßen Verfahrens;
- Figur 4: eine schematische Darstellung eines Trocknungsvorgangs bei dem ersten Ausführungsbeispiel des erfindungsgemäßen Ver- fahrens;
- Figur 5: eine schematische Darstellung einer Temperaturführung während eines Trocknungsprozesses beim ersten Aus- führungsbeispiel des erfindungsgemäßen Verfahrens;
- Figur 6: eine schematische Darstellung einer Kraftbeaufschlagung eines Vorkörpers bei dem ersten Ausführungsbeispiel des erfindungsgemäßen Verfahrens;
- Figur 7: eine schematische Darstellung einer Temperaturführung während der Pyrolyse des Vorkörpers gemäß dem ersten Ausführungsbeispiel des erfindungsgemäßen Verfahrens;
- Figur 8: eine schematische Darstellung einer Anordnung des Kohlen- stoffkörpers während der Silizierung;
- Figur 9: eine schematische Darstellung einer Temperaturführung während der Silizierung des Kohlenstoffkörpers bei dem Verfahren gemäß dem ersten Ausführungsbeispiel;
- Figur 10: ein Gefügebild eines Anschliffs der Oberfläche bei einer SiC-Keramik gemäß dem ersten Ausführungsbeispiel des erfindungsgemäßen Verfahrens;
- Figur 11: ein Gefügebild eines Querschliffs der SiC-Keramik gemäß dem ersten Ausführungsbeispiel des erfindungsgemäßen Ver- fahrens;
- Figur 12: eine schematische Darstellung der ersten Verfahrensschritte ähnlich Figur 1 bei einem zweiten Ausführungsbeispiel des erfindungsgemäßen Verfahrens und
- Figur 13: eine schematische Darstellung einer Temperaturführung bei einer einstufigen Pyrolyse entsprechend einem dritten Aus- führungsbeispiel des erfindungsgemäßen Verfahrens;

- Tabelle 1: eine tabellarische Darstellung einer Entwicklung von Porosität und Dichte im Verlauf des ersten Ausführungsbeispiels des erfindungsgemäßen Verfahrens;
- Tabelle 2: eine tabellarische Darstellung der Entwicklung von Porosität und Dichte bei dem zweiten Ausführungsbeispiel des erfindungsgemäßen Verfahrens;
- Tabelle 3: eine tabellarische Darstellung der Entwicklung von Porosität und Dichte bei dem dritten Ausführungsbeispiel des erfindungsgemäßen Verfahrens.

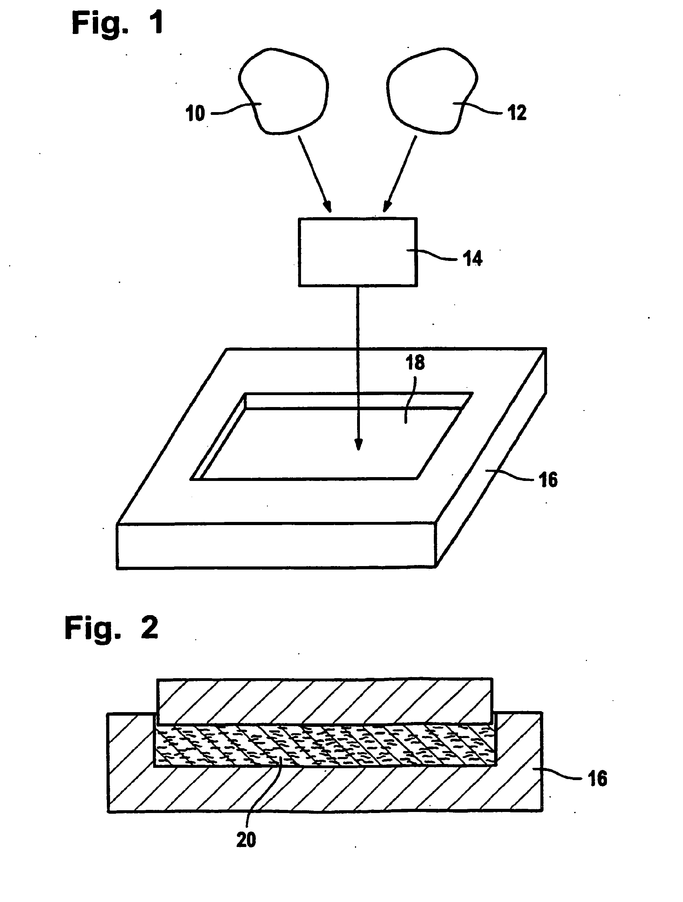

Ein erstes Ausführungsbeispiel eines erfindungsgemäßen Verfahrens zur Herstellung einer Platte als Strukturkeramik und/oder Funktionskeramik sieht vor, daß als Ausgangsbestandteile Holzmehl 10, in diesem Fall Buchenmehl, mit einer Korngröße von kleiner 50 µm, und ein Bindemittel 12, beispielsweise Phenolharz mit einer Korngröße von kleiner 15 µm, miteinander in einem Mischer 14 trocken vermischt werden, wobei der Massenanteil des Holzmehls beispielsweise 77 % beträgt und der Massenanteil des Bindemittels 23 % (Figur 1).

Das in dem Mischer 14 mit dem Bindemittel 12 trocken vermischte Holzmehl wird dann in eine Ausnehmung 18 einer Form 16 gegeben, wobei die Ausnehmung 18 die Grundform der herzustellenden Platte aus Strukturkeramik und/oder Funktionskeramik hat.

In der Form 16 erfolgt, wie in Figur 2 dargestellt, ein Verdichten der trockenen Mischung aus Holzmehl 10 und Bindemittel 12 zu einem Formkörper 20 bei Preßdrücken von bis zunächst zu 15 MPa, jedoch dergestalt, daß in dem Formkörper 20 das Bindemittel 12 noch nicht ausgehärtet ist.

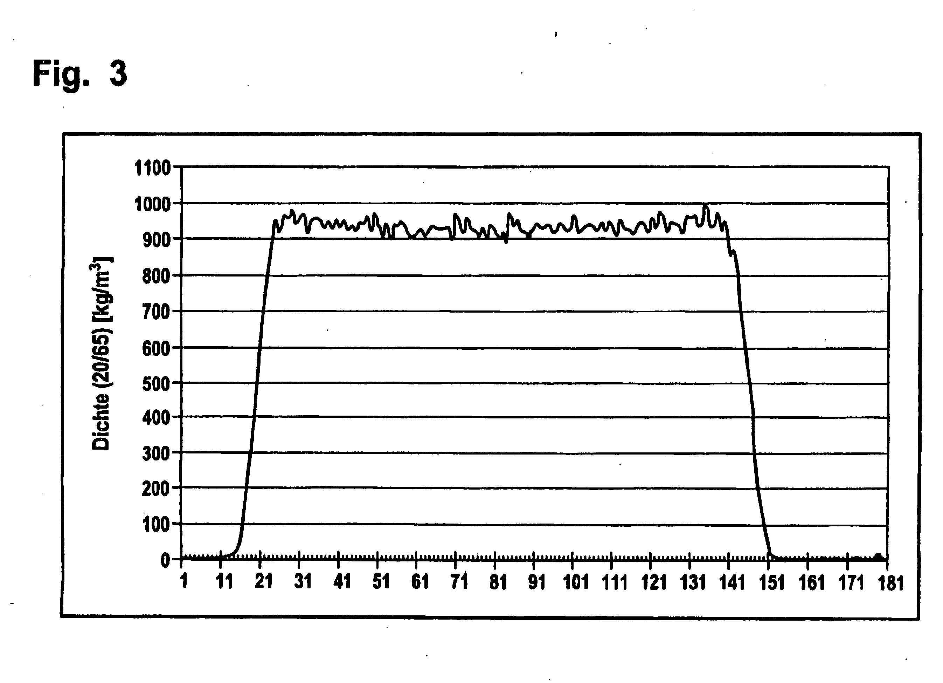

Der Formkörper hat, wie in Figur 3 dargestellt, ein Dichteprofil, welches zeigt, daß das Gefüge des Formkörpers 20 homogen und gradientenfrei ist.

Dieser Formkörper 20 wird nach dem Verpressen unter mindestens teilweiser Aufrechterhaltung des Preßdruckes in der Form 16 aufgeheizt, um das Bindemittel 12 auszuhärten. Der Aufheizvorgang sieht dabei vor, daß der Formkörper 20 auf Temperaturen bis zu 220°C erhitzt wird, um zu erreichen, daß das Bindemittel 12 im wesentlichen vollständig aushärtet und sich innig mit dem Holzmehl 10 verbindet.

Dabei entsteht ein Vorkörper 22, welcher aufgrund des ausgehärteten Bindemittels 12 in sich formstabil ist.

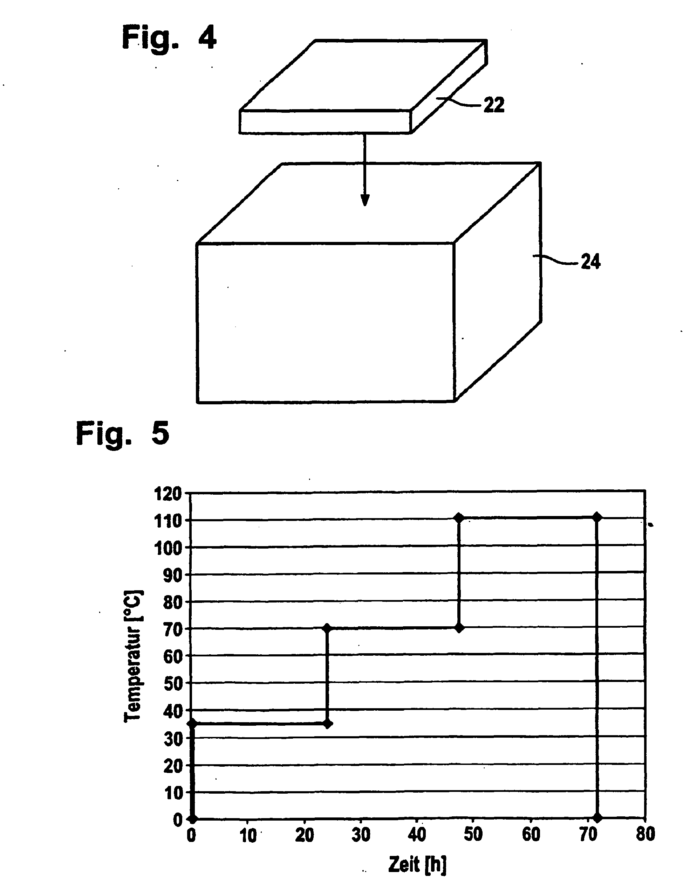

Dieser Vorkörper 22 wird nachfolgend, wie in Figur 4 dargestellt, in einem Trockenschrank unter Luft getrocknet, wobei ein Masseverlust von 0,1 M.-% auftritt. Der Trocknungsprozeß in dem Trockenschrank 24 läuft dabei entsprechend Figur 5 in mehreren Trockungsstufen ab.

D. h., der Vorkörper wird zunächst auf eine Temperatur von 35°C erwärmt und in einer ersten Trocknungsstufe auf dieser Temperatur für ungefähr 24 Stunden gehalten. Danach erfolgt ein Erhitzen auf ungefähr 70°C und

Halten dieser Temperatur in einer zweiten Trocknungsstufe für weitere 24 Stunden und anschließend erfolgt ein Erhitzen auf 110°C und Halten dieser Temperatur während einer dritten Trocknungsstufe für ungefähr weitere 24 Stunden. Im Anschluß erfolgt dann ein Abkühlen.

Das Trocknen des Vorkörpers 22 dient dazu, daß adsorptiv an der Oberfläche der Holzmehlpartikel gebundene sowie das durch die Polykondensation des Bindemittels beim Aushärten entstandene Restwasser zu entfernen.

Der in Figur 5 dargestellte Trocknungsprozeß ist in drei Trocknungsstufen unterteilt, um ein möglichst schonendes Trocknen des Vorkörpers zu erreichen, wobei insbesondere eine Rißbildung im Vorkörper vermieden werden soll.

Der Vorkörper hat, wie beispielsweise in Tabelle 1 dargestellt, eine Porosität von ungefähr 38 Vol.-% und eine Dichte von ungefähr 0,9 g/cm³.

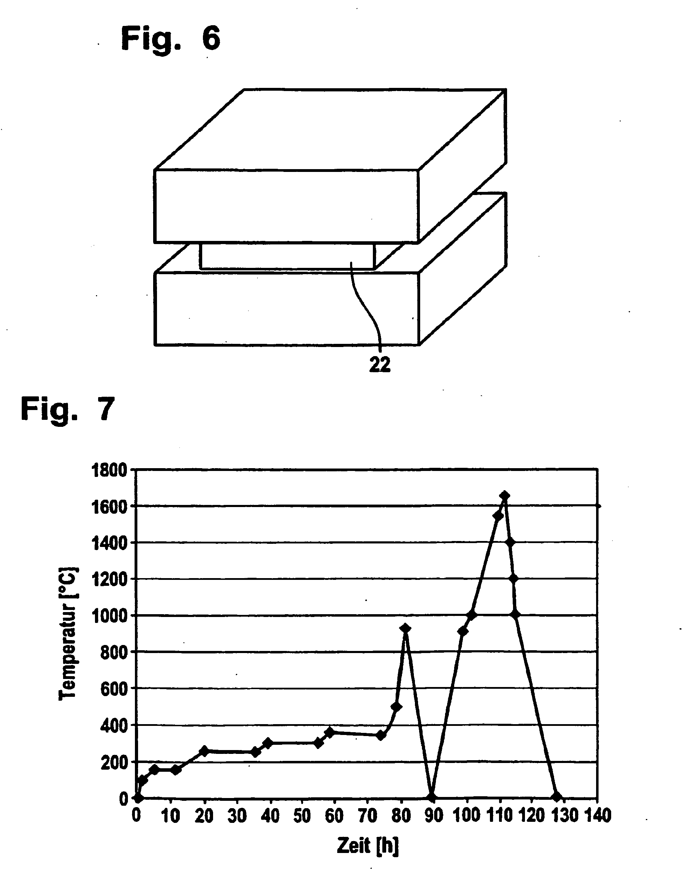

Dieser Vorkörper 22 wird nun, wie in Figur 6 dargestellt, unter mechanischer Belastung mit ungefähr 0,1 N/cm² pyrolysiert, und zwar unter Stickstoff als Schutzgas bei Drücken von ungefähr 1050 mbar. Die Temperaturführung in der Pyrolyseeinrichtung ist in Figur 7 schematisch dargestellt, wobei im Verlauf einer ersten, ungefähr 90 Stunden dauernden Pyrolysestufe zunächst während der ersten 70 Stunden eine schrittweise Erhöhung der Temperatur bis ungefähr 380°C erfolgt, beispielsweise eine schrittweise Erhöhung der Temperatur in insgesamt vier Schritten. Nachfolgend erfolgt in der ersten Pyrolysestufe ein Erhöhen der Temperatur auf ungefähr 900°C. Die Temperatur von ungefähr 900°C ist nach ungefähr 80 Stunden erreicht. Im Anschluß daran erfolgt zur Beendigung der ersten Pyrolysestufe eine Abkühlung auf Raumtemperatur, die nach ungefähr 90 Stunden erreicht ist.

Im Rahmen einer zweiten Pyrolysestufe erfolgt dann ein rasches Aufheizen von Raumtemperatur bis auf eine Temperatur von ungefähr 1650°C, die nach ungefähr 110 Stunden erreicht wird und im Anschluß daran ein Abkühlen auf Raumtemperatur, die bei ungefähr 128 Stunden wieder erreicht wird.

Während der ersten, insgesamt 90 Stunden dauernden Pyrolysestufe tritt dabei eine Massenreduktion von 64 % auf, und bei der nachfolgenden zweiten Pyrolysestufe unter reduziertem Druck von weniger als 2 mbar eine weitere Massenreduzierung um weitere 6,4 %.

Damit hat nach der Pyrolyse der Vorkörper 22 insgesamt ungefähr einen Masseverlust von 66,3 % erfahren.

Die Porosität und die Dichte des Vorkörpers nach der ersten Pyrolysestufe und der zweiten Pyrolysestufe sind ebenfalls in Tabelle 1 dargestellt. Nach der ersten Pyrolysestufe beträgt die Porosität ungefähr 52 Vol.-% und die Dichte ungefähr 0,87 g/cm³, während nach der zweiten Pyrolysestufe die Porosität ungefähr 56 Vol.-% beträgt und die Dichte ungefähr 0,85 g/cm³.

Der gesamte Längenschwund während der Pyrolyse betrug ungefähr 26 Längen-%, während der gesamte Volumenschwund ungefähr 64 Vol.-% betrug.

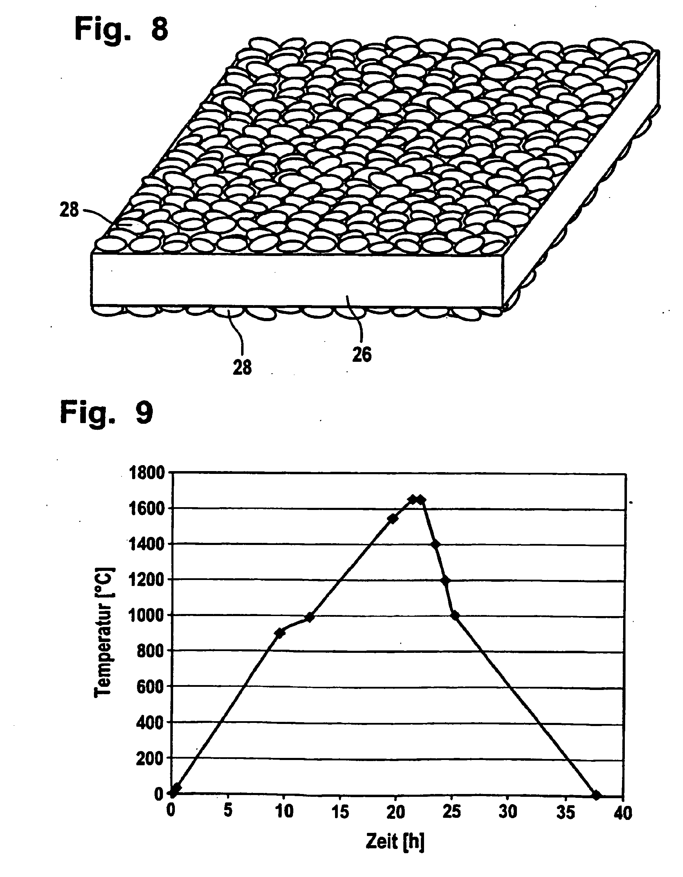

Der nach der Pyrolyse aus dem Vorkörper 22 entstandene Kohlenstoffkörper 26 wird, wie in Figur 8 dargestellt, zur Herstellung der Strukturkeramik oder Funktionskeramik siliziert, wobei der Kohlenstoffkörper 26 liegend mit der vierfachen Menge an Silizium 28 bezogen auf die Masse des Kohlenstoffkörpers siliziert wird. Dabei werden ungefähr 50 % des Siliziums 28 von oben und 50 % des Siliziums 28 von unten angeboten. Das Silizium hat dabei eine Korngröße von 0,1 bis ungefähr 10 mm.

Das Silizium 28 wird dabei durch Aufheizen gemäß Figur 9 verflüssigt, dringt in die offenen Poren des Kohlenstoffkörpers 26 ein und führt dort zur Bildung einer SiC-Keramik, die dicht und nahezu porenfrei ist, wobei eine Siliziummassenaufnahme durch den Kohlenstoffkörper 26 von ungefähr 306 Masse-% erfolgt.

Die Temperaturführung bei der Silizierung des Kohlenstoffkörpers 26 ist in Figur 9 im Detail dargestellt. Dabei ist erkennbar, daß zunächst während der ersten 10 Stunden eine lineare Temperaturerhöhung auf ungefähr 900°C erfolgte. Danach erfolgte im Verlauf von ungefähr 2 Stunden ein Anstieg auf 1000°C und ab 1000°C eine lineare Temperaturerhöhung auf 1650°C bis ungefähr 22 Stunden.

Die Abkühlung erfolgte dann von 1650°C auf ungefähr 1000°C bis zum Erreichen von ungefähr 25 Stunden und ab 1000°C erfolgte eine lineare Abkühlung auf Raumtemperatur bis ungefähr 37 Stunden.

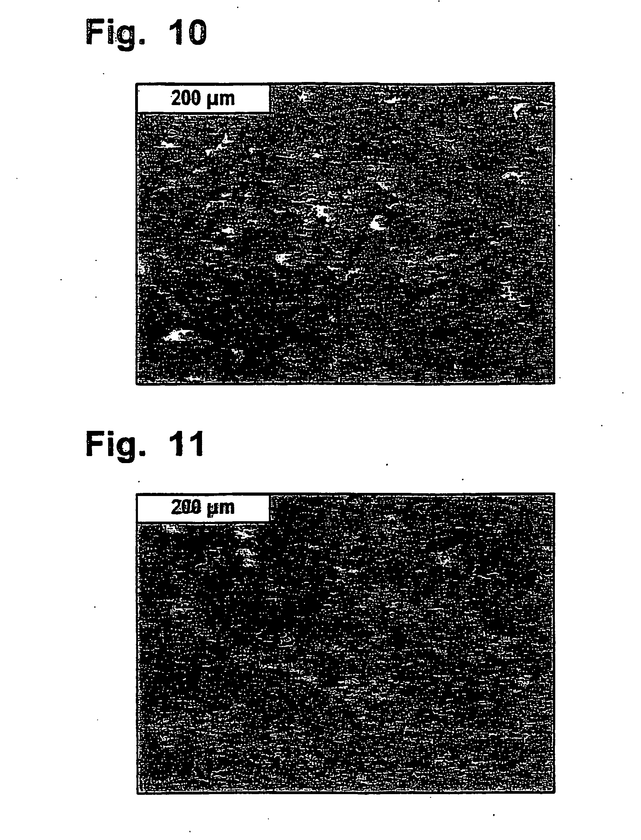

Die entstandene Strukturkeramik und/oder Funktionskeramik hat, wie die Gefügebilder in Figur 10 und Figur 11 zeigen, nahezu keine Poren. Dies ergibt sich auch aus Tabelle 1, in welcher für die Strukturkeramik und/oder Funktionskeramik eine Porosität von ungefähr 0,08 Vol.-% und eine Dichte von ungefähr 3,07 g/cm³ angegeben wird.

Die mittlere Biegefestigkeit der Struktur- oder Funktionskeramik beträgt ca. 400 MPa, bei einer Härte von HR 83, die nach dem Rockwell-Verfahren bestimmt wurde.

In Figur 10 und 11 sind Gefügebilder der Keramik gezeigt. Nasschemisch ermittelt beträgt der SiC-Volumenanteil liegt bei ca. 82,7 %, der C-Anteil bei ca. 0,18 % und der Si-Anteil bei ca. 17,12 % bei einer offenen Restporosität von ca. 0,1 %.

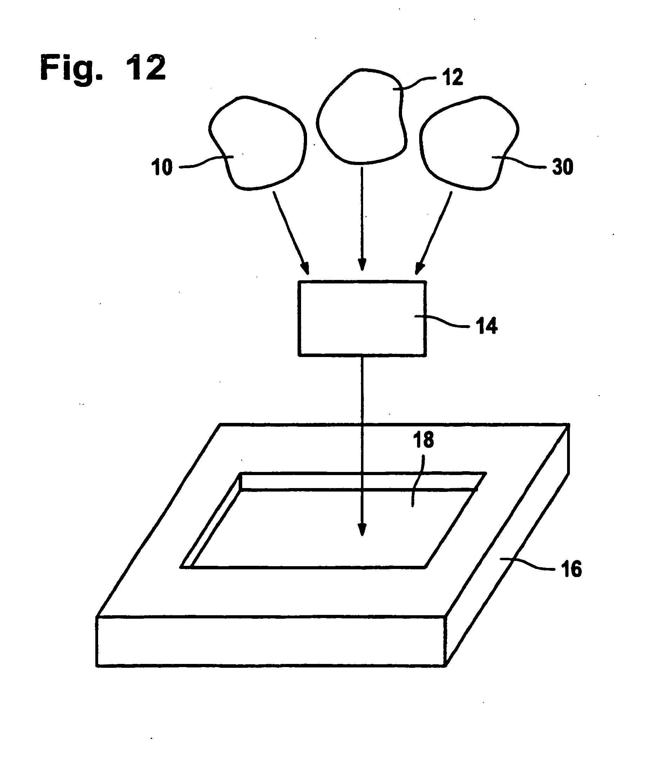

Bei einem zweiten Ausführungsbeispiel eines erfindungsgemäßen Verfahrens, schematisch dargestellt in Figur 12, werden als Ausgangsbestandteile nicht nur Holzmehl 10, beispielsweise Buchenmehl, und Binder 12, sondern zusätzlich als Additiv Ruß 30 in dem Mischer 14 trocken gemischt, wobei beispielsweise der Anteil des Holzmehls 10 ungefähr 54,5 Masse-% beträgt, der Anteil des Bindemittels ungefähr 13,5 Masse-% und der Anteil des Additivs 30, beispielsweise in Form von Ruß, 32 Masse-% beträgt. Das Verpressen dieser Mischung in der Form 16 erfolgt - in gleicher Weise wie beim ersten Ausführungsbeispiel - bei ungefähr 15 bar und nachfolgend erfolgt eine Aufheizung des Formkörpers 20 zur Bildung des Vorkörpers 22 unter Aushärten des Bindemittels 12 auf eine Temperatur von ungefähr 220°C.

Ohne weitere Vortrocknung wird der dabei entstandene Vorkörper 22 unmittelbar im Anschluß an das Aushärten des Bindemittels pyrolysiert.

Die Porosität und Dichte des Vorkörpers vor der Pyrolyse, nach der ersten Pyrolysestufe und nach der zweiten Pyrolysestufe sind dabei in Tabelle 2 dargestellt.

Durch die Verwendung des Additivs 30 in Form von Ruß betrug der Massenverlust bei der Pyrolyse nach der zweiten Pyrolysestufe nur ca. 45 % und die lineare Dimensionsänderung betrug ca. 10 %.

Aufgrund des verminderten Massenverlustes und der reduzierten Volumenschwindung durch das Additiv konnte ein Verzug der Platte während der Pyrolyse vermieden werden.

Im übrigen erfolgte die Pyrolyse in gleicher Weise wie im Zusammenhang mit dem ersten Ausführungsbeispiel beschrieben.

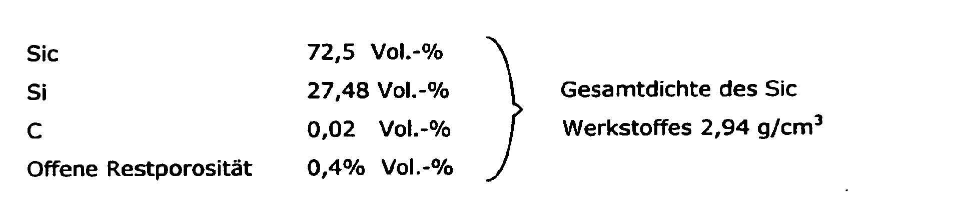

Bei einem dritten Ausführungsbeispiel eines erfindungsgemäßen Verfahrens wird der Vorkörper 22 in gleicher Weise hergestellt, wie im Zusammenhang mit dem zweiten Ausführungsbeispiel beschrieben und in Figur 12 schematisch dargestellt.

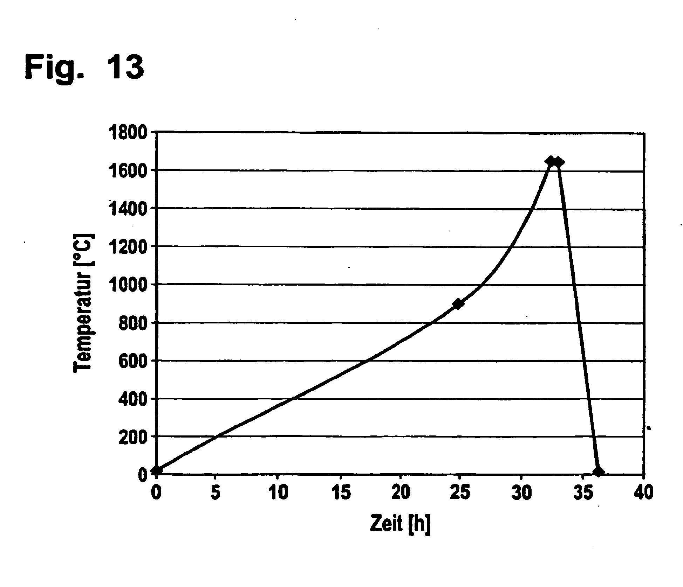

In Abwandlung des zweiten Ausführungsbeispiels erfolgt allerdings die Pyrolyse in Form einer einstufigen Pyrolyse, wobei die Temperaturführung der einstufigen Pyrolyse in Figur 13 dargestellt ist. Ferner betrug der Druck des Stickstoffs weniger als 200 mbar bis zum Erreichen einer Temperatur von ungefähr 900°C und ab einer Temperatur von 900°C wurde der Druck des Stickstoffs auf weniger als 2 mbar reduziert, so lange, bis eine Temperatur von 1650°C erreicht wurde. Die Temperatur von ungefähr 1650°C wurde nach ungefähr 32 Stunden erreicht und nachfolgend bis ungefähr 35 Stunden erfolgte ein Abkühlen auf Raumtemperatur.

Bei Verwendung des Vorkörpers 22 trat bei der einstufigen Pyrolyse und hohen Aufheizraten von ungefähr 35 Grad pro Stunde ein Massenverlust von ca. 49 % auf. Die Längen- und Dickenänderung des Vorkörpers 22 betrug jeweils ca. 11 %. Durch die isotrope Schwindung des Vorkörpers 22 während der Pyrolyse konnte der Vorkörper 22 auch ohne mechanische Druckbelastung rißfrei pyrolysiert werden.

Die sich in diesem einstufigen Pyroslyseprozeß, der ohne mechanische Beschwerung durchgeführt wurde, ergebenden offenen Porositäten und Dichten sind in Tabelle 3 ebenfalls zusammenfassend dargestellt. Folgende Phasenanteile wurden nasschemisch ermittelt:

| | |
|---|---|
| Sic | 66,82 Vol.-% |
| Si | 33,15 Vol.-% |
| C | 0,03 Vol.-% |

Bei einem vierten Ausführungsbeispiel ist das erste Ausführungsbeispiel insoweit abgewandelt, daß kein Bindemittel verwendet wird, sondern das Holzmehl 10 lediglich durch Verpressen zum Vorkörper gebunden wird.

Im übrigen entspricht das vierte Ausführungsbeispiel dem ersten Ausführungsbeispiel.

Bei einem fünften Ausführungsbeispiel wird in Abwandlung des vierten Ausführungsbeispiels anstelle von Holzmehl 10 Zellulosepulver eingesetzt und ebenfalls nur durch Verpressen gebunden, so daß ein ausreichend stabiler Vorkörper entsteht.

**Tab. 1: Porosität und Dichte der Probe aus Beispiel 1 während der verschiedenen Prozessstufen**

| | Vorkörper | nach 1. Pyr. Stufe | nach 2. Pyr. Stufe | SiC-Keramik |
|---|---|---|---|---|
| Porosität [Vol.-%] | 38 | 52 | 56 | 0,08 |
| Dichte [g/cm³] | 0,90 | 0,87 | 0,85 | 3,07 |

**Tab. 2: Porosität und Dichte der Probe aus Beispiel 2 während der verschiedenen Prozessstufen**

| | Vorkörper | nach 1. Pyr. Stufe | nach 2. Pyr. Stufe | SiC-Keramik |
|---|---|---|---|---|
| Porosität [Vol.-%] | 40 | 62 | 56 | 0,4 |
| Dichte [g/cm³] | 0,88 | 0,69 | 0,66 | 2,94 |

**Tab. 3: Porosität und Dichte der Probe aus Beispiel 3 während der verschiedenen Prozessstufen**

| | Vorkörper | nach Pyrolyse | SiC-Keramik |
|---|---|---|---|
| Porosität [Vol.-%] | 40 | 56 | 0,2 |
| Dichte [g/cm³] | 0,88 | 0,66 | 2,92 |

## Patentansprüche

1. Verfahren zur Herstellung von Strukturkeramiken und/oder Funktionskeramiken aus Siliziumcarbid-Keramik, bei welchem aus einem zellulosehaltigen Werkstoff ein poröser Vorkörper hergestellt wird, der poröse Vorkörper mittels Pyrolyse in einen offenporösen Kohlenstoffkörper umgewandelt wird und der offenporöse Kohlenstoffkörper durch Infiltration von Silizium umfassenden Materialien in eine Silizium umfassende Carbid-Keramik, insbesondere Siliziumcarbid-Keramik, umgewandelt wird,
**dadurch gekennzeichnet, dass** zur Herstellung des Vorkörpers als Ausgangsbestandtelle mindestens zellulosehaltiges Pulver und Bindemittel verwendet werden, dass das zellulosehaltige Pulver von einer kapillaren Zellstruktur freie Partikel aufweist, dass die Ausgangsbestandteile gemischt und ohne Härtung des Bindemittels zu dem Formkörper verpresst werden und dass dann der Formkörper in einer Presse auf eine Temperatur aufgeheizt wird, bei welcher eine Aushärtung des Bindemittels erfolgt.

2. Verfahren nach Anspruch 1, **dadurch gekennzeichnet, dass** die Ausgangsbestandteile eine Korngröße von kleiner als 300 µm aufweisen.

3. Verfahren nach Anspruch 2, **dadurch gekennzeichnet, dass** die Ausgangsbestandteile eine Korngröße von kleiner 100 µm aufweisen.

4. Verfahren nach Anspruch 3, **dadurch gekennzeichnet, dass** die Ausgangsbestandteile eine Korngröße von kleiner als 50 µm aufweisen.

5. Verfahren nach einem der voranstehenden Ansprüche, **dadurch gekennzeichnet, dass** das zellulosehaltlge Pulver eine Korngröße von kleiner als 50 µm aufweist.

6. Verfahren nach Anspruch 5, **dadurch gekennzeichnet, dass** das zellulosehaltlge Pulver eine Korngröße von kleiner als 30 µm aufweist.

7. Verfahren nach einem der voranstehenden Ansprüche, **dadurch gekennzeichnet, dass** das zellulosehaltige Pulver Holzpulver umfasst.

8. Verfahren nach einem der Ansprüche 1 bis 6, **dadurch gekennzeichnet, dass** das zellulosehaltige Pulver frei von zellularen Strukturen ist.

9. Verfahren nach einem der voranstehenden Ansprüche, **dadurch gekennzeichnet, dass** das zellulosehaltige Pulver Zellulosepulver umfasst.

10. Verfahren nach einem der voranstehenden Ansprüche, **dadurch gekennzeichnet, dass** einer der Ausgangsbestandteile Bindemittel ist.

11. Verfahren nach einem der voranstehenden Ansprüche, **dadurch gekennzeichnet, dass** als Bindemittel trockenes Bindemittel verwendet wird.

12. Verfahren nach Anspruch 11, **dadurch gekennzeichnet, dass** das trockene Bindemittel pulverförmig dem zellulosehaltigen Pulver zugesetzt wird.

13. Verfahren nach Anspruch 11, **dadurch gekennzeichnet, dass** das pulverförmige Bindemittel eine Korngröße von kleiner 15 µm aufweist.

14. Verfahren nach einem der voranstehenden Ansprüche, **dadurch gekennzeichnet, dass** das Bindemittel ein Phenolharz umfasst.

15. Verfahren nach einem der voranstehenden Ansprüche, **dadurch gekennzeichnet, dass** die Korngröße des zellulosehaltigen Pulvers und des Bindemittels in ungefähr der gleichen Größenordnung liegen.

16. Verfahren nach Anspruch 15, **dadurch gekennzeichnet, dass** die Korngröße des zellulosehaltigen Pulvers und des Bindemittels sich um maximal einen Faktor 3 voneinander unterscheiden.

17. Verfahren nach Anspruch 15, **dadurch gekennzeichnet, dass** die Korngröße des zellulosehaltigen Pulvers und des Bindemittels sich im Wesentliche nicht unterscheiden.

18. Verfahren nach einem der voranstehenden Ansprüche, **dadurch gekennzeichnet, dass** als Ausgangsbestandteil noch mindestens ein Additiv zugesetzt wird.

19. Verfahren nach Anspruch 18, **dadurch gekennzeichnet, dass** das Additiv pulverförmig ist.

20. Verfahren nach Anspruch 19, **dadurch gekennzeichnet, dass** das Additiv eine Korngröße aufweist, welche in der Größenordnung der Korngröße des zellulosehaltigen Pulvers liegt oder kleiner ist.

21. Verfahren nach Anspruch 20, **dadurch gekennzeichnet, dass** die Korngröße des mindestens einen Additivs und des zellulosehaltigen Pulvers sich um maximal einen Faktur 5 unterscheiden.

22. Verfahren nach einem der Ansprüche 18 bis 21, **dadurch gekennzeichnet, dass** als Additiv ein reaktives Additiv zugesetzt wird.

23. Verfahren nach Anspruch 22, **dadurch gekennzeichnet, dass** als reaktives Additiv Kohlenstoffpulver, wie Ruß und/oder Graphit zugesetzt wird.

24. Verfahren nach einem der Ansprüche 18 bis 23, **dadurch gekennzeichnet, dass** als Additiv ein nicht reaktives Additiv zugesetzt wird.

25. Verfahren nach Anspruch 24, **dadurch gekennzeichnet, dass** als nicht reaktives Additiv Carbide und/oder Boride und/oder Nitride und/oder Silizide und/oder Oxide zugesetzt werden.

26. Verfahren nach einem der voranstehenden Ansprüche, **dadurch gekennzeichnet, dass** die Ausgangsbestandteile trocken gemischt werden.

27. Verfahren nach Anspruch 26, **dadurch gekennzeichnet, dass** die Ausgangsbestandteile durch Mischen homogenisiert werden.

28. Verfahren nach einem der voranstehenden Ansprüche, **dadurch gekennzeichnet, dass** die Ausgangsbestandteile in eine Form eingegeben werden.

29. Verfahren nach Anspruch 28, **dadurch gekennzeichnet, dass** die Ausgangsbestandteile trocken in die Form eingegeben werden.

30. Verfahren nach einem der voranstehenden Ansprüche, **dadurch gekennzeichnet, dass** die Verdichtung der Ausgangsbestandteile zum Formkörper bei Pressdrücken von bis zu 15 MPa erfolgt.

31. Verfahren nach einem der voranstehenden Ansprüche, **dadurch gekennzeichnet, dass** die Ausgangsbestandteile im Wesentlichen ohne Erwärmung zu dem Formkörper verpresst werden.

32. Verfahren nach einem der voranstehenden Ansprüche, **dadurch gekennzeichnet, dass** das Verpressen so erfolgt, dass der Formkörper eine Dichte aufweist, welche im Bereich von ungefähr 0,4 g/cm³ bis ungefähr 1,5 g/cm³ liegt.

33. Verfahren nach Anspruch 32, **dadurch gekennzeichnet, dass** das Verpressen so erfolgt, dass der Formkörper eine Dichte aufweist, welche im Bereich von ungefähr 0,65 g/cm³ bis ungefähr 1,0 g/cm³ liegt.

34. Verfahren nach einem der voranstehenden Anspruch, **dadurch gekennzeichnet, dass** das Aufheizen des Formkörpers derart erfolgt, dass das Bindemittel im Wesentlichen vollständig aushärtet.

35. Verfahren nach einem der voranstehenden Ansprüche, **dadurch gekennzeichnet, dass** das Aushärten des Bindemittels bei Temperaturen bis 220°C erfolgt.

36. Verfahren nach einem der voranstehenden Ansprüche, **dadurch gekennzeichnet, dass** der offenporöse Vorkörper eine mittlere Porosität aufweist, die im Bereich zwischen ungefähr 10 Vol.-% und ungefähr 70 Vol.-% liegt.

37. Verfahren nach Anspruch 36, **dadurch gekennzeichnet, dass** der offenporöse Vorkörper eine mittlere Porosität aufweist, die im Bereich zwischen ungefähr 20 Vol.-% und ungefähr 60 Vol.-% liegt.

38. Verfahren nach einem der voranstehenden Ansprüche, **dadurch gekennzeichnet, dass** der Vorkörper im Wesentlichen ohne Lagerungszeit nach dem Aushärten des Bindemittels pyrolysiert wird.

39. Verfahren nach einem der Ansprüche 1 bis 37, **dadurch gekennzeichnet, dass** der Vorkörper nach dem Aushärten des Bindemittels feuchtigkeitsinert gelagert wird.

40. Verfahren nach Anspruch 39, **dadurch gekennzeichnet, dass** der Vorkörper nach dem Aushärten des Bindemittels luftdicht abgeschlossen gelagert wird.

41. Verfahren nach Anspruch 40, **dadurch gekennzeichnet, dass** die luftdichte Lagerung durch Einschweißen des Vorkörpers in eine Folie durchgeführt wird.

42. Verfahren nach Anspruch 39 bis 41, **dadurch gekennzeichnet, dass** der Vorkörper nach Aushärten des Bindemittels unter Inertgas gelagert wird.

43. Verfahren nach einem der voranstehenden Ansprüche, **dadurch gekennzeichnet, dass** der offenporöse Vorkörper vor der Pyrolyse getrocknet wird.

44. Verfahren nach Anspruch 43, **dadurch gekennzeichnet, dass** die Trocknung bei mehreren Temperaturstufen erfolgt.

45. Verfahren nach Anspruch 44, **dadurch gekennzeichnet, dass** die Trocknungstemperatur in einer ersten Trocknungsstufe zwischen Raumtemperatur und maximal ungefähr 35°C liegt.

46. Verfahren nach Anspruch 44 oder 45, **dadurch gekennzeichnet, dass** die Trocknungstemperatur in einer zweiten Trocknungsstufe im Bereich zwischen ungefähr 35°C und maximal ungefähr 70°C liegt.

47. Verfahren nach einem der Ansprüche 44 bis 46, **dadurch gekennzeichnet, dass** die Trocknungstemperatur in einer dritten Trocknungsstufe zwischen ungefähr 70°C bis maximal ungefähr 110°C liegt.

48. Verfahren nach einem der Ansprüche 43 bis 47, **dadurch gekennzeichnet, dass** eine Aufheizgeschwindigkeit beim Trocknen maximal 10 Grad/min beträgt.

49. Verfahren nach einem der Ansprüche 43 bis 48, **dadurch gekennzeichnet, dass** die Haltezeit in einer Trocknungsstufe mindestens ungefähr 20 Stunden beträgt.

50. Verfahren nach einem der voranstehenden Ansprüche, **dadurch gekennzeichnet, dass** die Pyrolyse des Vorkörpers unter Stickstoffatmosphäre erfolgt.

51. Verfahren nach Anspruch 50, **dadurch gekennzeichnet, dass** die Pyrolyse bei einem Stickstoffatmosphärendruck von mindestens 1000 mbar erfolgt.

52. Verfahren nach einem der voranstehenden Ansprüche, **dadurch gekennzeichnet, dass** die Pyrolyse des Vorkörpers bei einem Druck von weniger als 1000 mbar erfolgt.

53. Verfahren nach einem der voranstehenden Ansprüche, **dadurch gekennzeichnet, dass** die Pyrolyse des Vorkörpers einstufig erfolgt.

54. Verfahren nach Anspruch 53, **dadurch gekennzeichnet, dass** bei der einstufigen Pyrolyse eine Aufheizung von Raumtemperatur bis maximal ungefähr 1700°C erfolgt.

55. Verfahren nach Anspruch 53 oder 54, **dadurch gekennzeichnet, dass** noch die einstufige Pyrolyse während einer Gesamtdauer von nicht mehr als 120 Stunden erfolgt.

56. Verfahren nach einem der Ansprüche 1 bis 52, **dadurch gekennzeichnet, dass** die Pyrolyse des Vorkörpers mindestens zweistufig erfolgt.

57. Verfahren nach Anspruch 56, **dadurch gekennzeichnet, dass** in einer ersten Pyrolysestufe eine Aufheizung von Raumtemperatur auf maximal 900°C erfolgt.

58. Verfahren nach Anspruch 57, **dadurch gekennzeichnet, dass** nach der ersten Pyrolysestufe eine Abkühlung auf Raumtemperatur erfolgt.

59. Verfahren nach Anspruch 57 oder 58, **dadurch gekennzeichnet, dass** die Pyrolyse in einer ersten Pyrolysestufe während einer Gesamtdauer von nicht mehr als 120 Stunden erfolgt.

60. Verfahren nach einem der Ansprüche 56 bis 59, **dadurch gekennzeichnet, dass** die Pyrolyse in einer zweiten Pyrolysestufe eine Temperaturbehandlung von Raumtemperatur bis maximal 1700°C umfasst.

61. Verfahren nach einem der Ansprüche 56 bis 60, **dadurch gekennzeichnet, dass** die Pyrolyse in der zweiten Pyrolysestufe bei einem Druck zwischen ungefähr 0,1 mbar und ungefähr 10 mbar erfolgt.

62. Verfahren nach einem der Ansprüche 56 bis 61, **dadurch gekennzeichnet, dass** nach der zweiten Pyrolysestufe eine Abkühlung auf Raumtemperatur erfolgt.

63. Verfahren nach einem der voranstehenden Ansprüche, **dadurch gekennzeichnet, dass** der offenporöse Kohlenstoffkörper eine Porosität aufweist, die im Bereich zwischen ungefähr 30 Vol.-% bis ungefähr 80 Vol.-% liegt.

64. Verfahren nach Anspruch 63, **dadurch gekennzeichnet, dass** der offenporöse Kohlenstoffkörper eine Porosität aufweist, die im Bereich zwischen ungefähr 35 Vol.-% und ungefähr 70 Vol.-% liegt.

65. Verfahren nach einem der voranstehenden Ansprüche, **dadurch gekennzeichnet, dass** der Kohlenstoffkörper eine im Wesentlichen isotrope Porosität aufweist.

66. Verfahren nach einem der voranstehenden Ansprüche, **dadurch gekennzeichnet, dass** der Kohlenstoffkörper im Wesentlichen richtungsunabhängige Infiltrationseigenschaften für Silizium umfassende Materialien aufweist.

67. Verfahren nach einem der voranstehenden Ansprüche, **dadurch gekennzeichnet, dass** der Kohlenstoffkörper in einer endkonturnahen Form hergeteilt wird.

68. Verfahren nach einem der Ansprüche 1 bis 66, **dadurch gekennzeichnet, dass** der Kohlenstoffkörper als eine Teilform einer endkonturnahen Form hergestellt wird.

69. Verfahren nach einem der voranstehenden Ansprüche, **dadurch gekennzeichnet, dass** die Silizierung in Form einer Flüssigsilizierung durchgeführt wird.

70. Verfahren nach Anspruch 69, **dadurch gekennzeichnet, dass** die Temperatur bei der Silizierung oberhalb von 1400 °C liegt.

71. Verfahren nach Anspruch 69 oder 70, **dadurch gekennzeichnet, dass** der Druck des Stickstoffs bei der Silizierung im Bereich zwischen ungefähr 0,1mbar und ungefähr 10mbar liegt.

72. Verfahren nach einem der Ansprüche 69 bis 71, **dadurch gekennzeichnet, dass** die Maximaltemperatur bei der Silizierung bis zu zwei Stunden gehalten wird.

73. Verfahren nach einem der Ansprüche 69 bits 72, **dadurch gekennzeichnet, dass** bei der Silizierung mindestens ungefähr 200% Silizium bezogen auf die Masse des Kohlenstoffkörpers angeboten werden.

74. Verfahren nach einem der Ansprüche 69 bis 73, **dadurch gekennzeichnet, dass** bei der Silizierung ein Siliziumgranulat eingesetzt wird, dessen Korngröße zwischen ungefähr 0,1 mm und ungefähr 10 mm liegt.

75. Verfahren nach einem der voranstehenden Ansprüche, **dadurch gekennzeichnet, dass** der silizierte Kohlenstoffkörper mit einer im Wesentlichen isotropen Siliziumcarbid-Keramikstruktur hergestellt wird.

76. Verfahren nach einem der voranstehenden Ansprüche, **dadurch gekennzeichnet, dass** der silizierte Kohlenstoffkörper als eine im Wesentlichen homogene, gradientenfreie, insbesondere isotrope, Silizium umfassende Carbid-Keramikstruktur, insbesondere Siliziumcarbid-Keramikstruktur, hergestellt wird.

77. Verfahren nach Anspruch 76, **dadurch gekennzeichnet, dass** die Siliziumcarbid-Keramikstruktur mit einer Dichte von mehr als 2,9 g/cm³ hergestellt wird.

78. Verfahren nach Anspruch 77, **dadurch gekennzeichnet, dass** die Dichte größer als 3 g/cm³ ist.

## Claims

1. Method for the production of structural ceramics and/or functional ceramics consisting of silicon carbide ceramics, wherein a porous precursor body is produced from a cellulose-containing material, the porous precursor body is converted into an open-pored carbon body by means of pyrolysis and the open-pored carbon body is converted into silicon-containing carbide ceramics, in particular silicon carbide ceramics, as a result of infiltration of silicon-containing materials, **characterized in that** at least cellulose-containing powder and binding agent are used as starting ingredients for the production of the precursor body, that the cellulose-containing powder has particles free from any capillary cell structure, that the starting ingredients are mixed and pressed to form the moulded body without any hardening of the binding agent and that the moulded body is then heated up in a press to a temperature causing the binding agent to harden.

2. Method as defined in claim 1, **characterized in that** the starting ingredients have a grain size of less than 300 µm.

3. Method as defined in claim 2, **characterized in that** the starting ingredients have a grain size of less than 100 µm.

4. Method as defined in claim 3, **characterized in that** the starting ingredients have a grain size of less than 50 µm.

5. Method as defined in any one of the preceding claims, **characterized in that** the cellulose-containing powder has a grain size of less than 50 µm.

6. Method as defined in claim 5, **characterized in that** the cellulose-containing powder has a grain size of less than 30 µm.

7. Method as defined in any one of the preceding claims, **characterized in that** the cellulose-containing powder comprises wood powder.

8. Method as defined in any one of claims 1 to 6, **characterized in that** the cellulose-containing powder is free from cellular structures.

9. Method as defined in any one of the preceding claims, **characterized in that** the cellulose-containing powder comprises cellulose powder.

10. Method as defined in any one of the preceding claims, **characterized in that** one of the starting ingredients is binding agent.

11. Method as defined in any one of the preceding claims, **characterized in that** dry binding agent is used as binding agent.

12. Method as defined in claim 11, **characterized in that** the dry binding agent is added to the cellulose-containing powder in powder form.

13. Method as defined in claim 11, **characterized in that** the powdery binding agent has a grain size of less than 15 µm.

14. Method as defined in any one of the preceding claims, **characterized in that** the binding agent comprises a phenol resin.

15. Method as defined in any one of the preceding claims, **characterized in that** the grain size of the cellulose-containing powder and of the binding agent are approximately of the same order of magnitude.

16. Method as defined in claim 15, **characterized in that** the grain size of the cellulose-containing powder and of the binding agent differ from one another by at the most a factor of 3.

17. Method as defined in claim 15, **characterized in that** the grain size of the cellulose-containing powder and of the binding agent do not essentially differ.

18. Method as defined in any one of the preceding claims, **characterized in that** at least one additive is added as starting ingredient,

19. Method as defined in claim 18, **characterized in that** the additive is in powder form.

20. Method as defined in claim 19, **characterized in that** the additive has a grain size in the order of magnitude of or less than the grain size of the cellulose-containing powder.

21. Method as defined in claim 20, **characterized in that** the grain size of the at least one additive and of the cellulose-containing powder differ at the most by a factor of 5.

22. Method as defined in any one of claims 18 to 21, **characterized in that** a reactive additive is added as additive.

23. Method as defined in claim 22, **characterized in that** carbon powder, such as carbon black and/or graphite, is added as reactive additive.

24. Method as defined in any one of claims 18 to 23, **characterized in that** a non-reactive additive is added as additive.

25. Method as defined in claim 24, **characterized in that** carbides and/or borides and/or nitrides and/or silicides and/or oxides are added as non-reactive additive.

26. Method as defined in any one of the preceding claims, **characterized in that** the starting ingredients are mixed in a dry state.

27. Method as defined in claim 26, **characterized in that** the starting ingredients are homogenized as a result of mixing.

28. Method as defined in any one of the preceding claims, **characterized in that** the starting ingredients are fed into a mould.

29. Method as defined in claim 28, **characterized in that** the starting ingredients are fed into the mould in a dry state.

30. Method as defined in any one of the preceding claims, **characterized in that** the starting ingredients are compressed to form the moulded body at compacting pressures of up to 15 MPa.

31. Method as defined in any one of the preceding claims, **characterized in that** the starting ingredients are pressed to form the moulded body essentially without any heating.

32. Method as defined in any one of the preceding claims, **characterized in that** the pressing is carried out such that the moulded body has a density in the range of approximately 0.4 g/cm³ to approximately 1_{.}5 g/cm³.

33. Method as defined in claim 32, **characterized in that** the pressing is carried out such that the moulded body has a density in the range of approximately 0.65 g/cm³ to approximately 1.0 g/cm³.

34. Method as defined in any one of the preceding claims, **characterized in that** the moulded body is heated up in such a manner that the binding agent is hardened essentially completely.

35. Method as defined in any one of the preceding claims, **characterized in that** the hardening of the binding agent takes place at temperatures of up to 220°C.

36. Method as defined in any one of the preceding claims, **characterized in that** the open-pored precursor body has an average porosity in the range of between approximately 10 % by volume and approximately 70 % by volume.

37. Method as defined in claim 36, **characterized in that** the open-pored precursor body has an average porosity in the range of between approximately 20 % by volume and approximately 60 % by volume.

38. Method as defined in any one of the preceding claims, **characterized in that** the precursor body is pyrolysed essentially without any storage time following the hardening of the binding agent.

39. Method as defined in any one of claims 1 to 37, **characterized in that** after the hardening of the binding agent the precursor body is stored in a manner inert to moisture.

40. Method as defined in claim 39, **characterized in that** after the hardening of the binding agent the precursor body is stored in a manner closed so as to be air-tight.

41. Method as defined in claim 40, **characterized in that** the air-tight storage is brought about by sealing the precursor body in a film.

42. Method as defined in claim 39 to 41, **characterized in that** after hardening of the binding agent the precursor body is stored in inert gas.

43. Method as defined in any one of the preceding claims, **characterized in that** the open-pored precursor body is dried prior to the pyrolysis.

44. Method as defined in claim 43, **characterized in that** the drying is carried out in several temperature stages.

45. Method as defined in claim 44, **characterized in that** the drying temperature in a first drying stage is between room temperature and at the most approximately 35°C.

46. Method as defined in claim 44 or 45, **characterized in that** the drying temperature in a second drying stage is in the range of between approximately 35°C and at the most approximately 70°C.

47. Method as defined in any one of claims 44 to 46, **characterized in that** the drying temperature in a third drying stage is between approximately 70°C and at the most approximately 110°C.

48. Method as defined in any one of claims 43 to 47, **characterized in that** a heating velocity during the drying is at the most 10 degrees/min.

49. Method as defined in any one of claims 43 to 48, **characterized in that** the holding time in a drying stage is at least approximately 20 hours.

50. Method as defined in any one of the preceding claims, **characterized in that** the pyrolysis of the precursor body is carried out in a nitrogen atmosphere.

51. Method as defined in claim 50, **characterized in that** the pyrolysis is carried out at a nitrogen atmosphere pressure of at least 1,000 mbar.

52. Method as defined in any one of the preceding claims, **characterized in that** the pyrolysis of the precursor body is carried out at a pressure of less than 1,000 mbar.

53. Method as defined in any one of the preceding claims, **characterized in that** the pyrolysis of the precursor body is carried out in one stage.

54. Method as defined in claim 53, **characterized in that** a heating up from room temperature to at the most approximately 1700°C is brought about during the one-stage pyrolysis.

55. Method as defined in claim 53 or 54, **characterized in that** the one-stage pyrolysis is carried out during a total time period of not more than 120 hours.

56. Method as defined in any one of claims 1 to 52, **characterized in that** the pyrolysis of the precursor body is carried out in at least two stages.

57. Method as defined in claim 56, **characterized in that** a heating up from room temperature to at the most 900°C is brought about in a first pyrolysis stage.

58. Method as defined in claim 57, **characterized in that** a cooling to room temperature is brought about after the first pyrolysis stage.

59. Method as defined in claim 57 or 58, **characterized in that** the pyrolysis is carried out in a first pyrolysis stage during a total time period of not more than 120 hours.

60. Method as defined in any one of claims 56 to 59, **characterized in that** in a second pyrolysis stage the pyrolysis comprises a temperature treatment from room temperature up to at the most 1700°C.

61. Method as defined in any one of claims 56 to 60, **characterized in that** in the second pyrolysis stage the pyrolysis is carried out at a pressure of between approximately 0.1 mbar and approximately 10 mbar.

62. Method as defined in any one of claims 56 to 61, **characterized in that** after the second pyrolysis stage a cooling to room temperature is brought about.

63. Method as defined in any one of the preceding claims, **characterized in that** the open-pored carbon body has a porosity in the range of between approximately 30 % by volume and approximately 80 % by volume.

64. Method as defined in claim 63, **characterized in that** the open-pored carbon body has a porosity in the range of between approximately 35 % by volume and approximately 70 % by volume.

65. Method as defined in any one of the preceding claims, **characterized in that** the carbon body has an essentially isotropic porosity.

66. Method as defined in any one of the preceding claims, **characterized in that** the carbon body has infiltration properties for silicon-containing materials essentially independent of direction.

67. Method as defined in any one of the preceding claims, **characterized in that** the carbon body is produced in a shape close to the end contours.

68. Method as defined in any one of claims 1 to 66, **characterized in that** the carbon body is produced as a portion of a shape close to the end contours.

69. Method as defined in any one of the preceding claims, **characterized in that** the siliconization is carried out in the form of a liquid siliconization.

70. Method as defined in claim 69, **characterized in that** the temperature during the siliconization is above 1400°C.

71. Method as defined in claim 69 or 70, **characterized in that** the pressure of the nitrogen during the siliconization is in the range of between approximately 0.1 mbar and approximately 10 mbar.

72. Method as defined in any one of claims 69 to 71, **characterized in that** the maximum temperature during the siliconization is maintained for up to two hours.

73. Method as defined in any one of claims 69 to 72, **characterized in that** during the siliconization at least approximately 200 % of silicon in relation to the mass of the carbon body is offered.

74. Method as defined in any one of claims 69 to 73, **characterized in that** during the siliconization a silicon granulate is used with a grain size between approximately 0.1 mm and approximately 10 mm.

75. Method as defined in any one of the preceding claims, **characterized in that** the siliconized carbon body is produced with an essentially isotropic silicon carbide ceramic structure.

76. Method as defined in any one of the preceding claims, **characterized in that** the siliconized carbon body is produced as an essentially homogeneous, gradient-free, in particular isotropic silicon-containing carbide ceramic structure, in particular a silicon carbide ceramic structure.

77. Method as defined in claim 76, **characterized in that** the silicon carbide ceramic structure is produced with a density of more than 2.9 g/cm³.

78. Method as defined in claim 77, **characterized in that** the density is greater than 3 g/cm³.

## Revendications

1. Procédé de préparation de céramiques structurales et/ou de céramiques fonctionnelles à partir d'une céramique en carbure de silicium, au cours duquel on prépare un corps vert poreux à partir d'un matériau contenant de la cellulose, on transforme le corps vert poreux par pyrolyse en un corps carboné à pores ouverts et on transforme le corps carboné à pores ouverts, par infiltration de matériaux contenant du silicium, en une céramique carbure comprenant du silicium, en particulier une céramique carbure de silicium,
**caractérisé en ce que** pour la préparation du corps vert, on utilise comme constituants de départ, au moins une poudre contenant de la cellulose et un liant, **en ce que** la poudre contenant de la cellulose présente des particules exemptes d'une structure cellulaire capillaire, **en ce que** les constituants de départ sont mélangés et compressés en le corps moulé sans durcissement du liant, et **en ce que** le corps moulé est chauffé dans une presse à une température à laquelle un durcissement du liant se produit.

2. Procédé selon la revendication 1, **caractérisé en ce que** les constituants de départ présentent une granulométrie inférieure à 300 µm.

3. Procédé selon la revendication 2, **caractérisé en ce que** les constituants de départ présentent une granulométrie inférieure à 100 µm.

4. Procédé selon la revendication 3, **caractérisé en ce que** les constituants de départ présentent une granulométrie inférieure à 50 µm.

5. Procédé selon l'une des revendications précédentes, **caractérisé en ce que** la poudre contenant de la cellulose présente une granulométrie inférieure à 50 µm.

6. Procédé selon la revendication 5, **caractérisé en ce que** la poudre contenant de la cellulose présente une granulométrie inférieure à 30 µm.

7. Procédé selon l'une des revendications précédentes, **caractérisé en ce que** la poudre contenant de la cellulose comprend de la poudre de bois.

8. Procédé selon l'une des revendications 1 à 6, **caractérisé en ce que** la poudre contenant de la cellulose est exempte de structures cellulaires.

9. Procédé selon l'une des revendications précédentes, **caractérisé en ce que** la poudre contenant de la cellulose comprend de la poudre de cellulose.

10. Procédé selon l'une des revendications précédentes, **caractérisé en ce qu'**un des constituants de départ est le liant.

11. Procédé selon l'une des revendications précédentes, **caractérisé en ce que** l'on utilise comme liant, un liant sec.

12. Procédé selon la revendication 11, **caractérisé en ce que** le liant sec est ajouté sous forme pulvérulente, à la poudre contenant de la cellulose.

13. Procédé selon la revendication 11, **caractérisé en ce que** le liant pulvérulent présente une granulométrie inférieure à 15 µm.

14. Procédé selon l'une des revendications précédentes, **caractérisé en ce que** le liant comprend une résine phénolique.

15. Procédé selon l'une des revendications précédentes, **caractérisé en ce que** les granulométries de la poudre contenant de la cellulose et du liant se situent environ, dans le même ordre de grandeur.

16. Procédé selon la revendication 15, **caractérisé en ce que** les granulométries de la poudre contenant de la cellulose et du liant se différencient l'une de l'autre, d'un facteur 3 au maximum.

17. Procédé selon la revendication 15, **caractérisé en ce que** les granulométries de la poudre contenant de la cellulose et du liant sont essentiellement les mêmes.

18. Procédé selon l'une des revendications précédentes, **caractérisé en ce que** l'on ajoute encore au moins un additif comme constituant de départ.

19. Procédé selon la revendication 18, **caractérisé en ce que** l'additif est pulvérulent.

20. Procédé selon la revendication 19, **caractérisé en ce que** l'additif présente une granulométrie, qui se situe dans l'ordre de grandeur de la granulométrie de la poudre contenant de la cellulose ou qu'elle est inférieure à celle-ci.

21. Procédé selon la revendication 20, **caractérisé en ce que** les granulométries du au moins un additif et de la poudre contenant de la cellulose se différencient d'un facteur 5 au maximum.

22. Procédé selon l'une des revendications 18 à 21, **caractérisé en ce que** l'on ajoute comme additif, un additif réactif.

23. Procédé selon la revendication 22, **caractérisé en ce que** l'on ajoute comme additif réactif, de la poudre de carbone, comme la suie et/ou du graphite.

24. Procédé selon l'une des revendications 18 à 23, **caractérisé en ce que** l'on ajoute comme additif, un additif non réactif.

25. Procédé selon la revendication 24, **caractérisé en ce que** l'on ajoute comme additif non réactif, un carbure et/ou un borure et/ou un nitrure et/ou un siliciure et/ou un oxyde.

26. Procédé selon l'une des revendications précédentes, **caractérisé en ce que** l'on mélange à sec les constituants de départ.

27. Procédé selon la revendication 26, **caractérisé en ce que** l'on homogénéise les constituants de départ par mélange.

28. Procédé selon l'une des revendications précédentes, **caractérisé en ce que** l'on introduit les constituants de départ dans un moule.

29. Procédé selon la revendication 28, **caractérisé en ce que** l'on introduit les constituants de départ à sec dans le moule.

30. Procédé selon l'une des revendications précédentes, **caractérisé en ce que** la densification des constituants de départ en corps moulé est réalisée à des pressions allant jusqu'à 15 MPa.

31. Procédé selon l'une des revendications précédentes, **caractérisé en ce que** les constituants de départ sont compressés en le corps moulé, essentiellement sans chauffage.

32. Procédé selon l'une des revendications précédentes, **caractérisé en ce que** l'on réalise la compression de sorte que le corps moulé présente une masse volumique, qui se situe dans l'intervalle allant d'environ 0,4 g/cm³ à environ 1,5 g/cm³.

33. Procédé selon la revendication 32, **caractérisé en ce que** l'on réalise la compression de sorte que le corps moulé présente une masse volumique, qui se situe dans l'intervalle allant d'environ 0,65 g/cm³ à environ 1,0 g/cm³.

34. Procédé selon l'une des revendications précédentes, **caractérisé en ce que** l'on réalise le chauffage du corps moulé de sorte que le liant durcit presque complètement.

35. Procédé selon l'une des revendications précédentes, **caractérisé en ce que** l'on réalise le durcissement du liant à des températures allant jusqu'à 220°C.

36. Procédé selon l'une des revendications précédentes, **caractérisé en ce que** le corps vert à pores ouverts présente une porosité moyenne, qui se situe dans l'intervalle allant d'environ 10% en volume à environ 70% en volume.

37. Procédé selon la revendication 36, **caractérisé en ce que** le corps vert à pores ouverts présente une porosité moyenne, qui se situe dans l'intervalle allant d'environ 20% en volume à environ 60% en volume.

38. Procédé selon l'une des revendications précédentes, **caractérisé en ce que** le corps vert à pores ouverts est pyrolysé essentiellement sans période de stockage après le durcissement du liant.

39. Procédé selon l'une des revendications 1 à 37, **caractérisé en ce que** le corps vert est stocké à l'abri de l'humidité.

40. Procédé selon la revendication 39, **caractérisé en ce que** le corps vert est stocké à l'abri de l'air, après le durcissement du liant.

41. Procédé selon la revendication 40, **caractérisé en ce que** le stockage à l'abri de l'air est effectué par enveloppement du corps vert dans une feuille et fermeture par soudure.

42. Procédé selon les revendications 39 à 41, **caractérisé en ce que** le corps vert est stocké sous gaz inerte après durcissement du liant.

43. Procédé selon l'une des revendications précédentes, **caractérisé en ce que** le corps vert à pores ouverts est séché avant la pyrolyse.

44. Procédé selon la revendication 43, **caractérisé en ce que** le séchage est réalisé par étapes à plusieurs niveaux de température.

45. Procédé selon la revendication 44, **caractérisé en ce que** la température de séchage se situe dans une première étape de séchage, entre la température ambiante et environ 35°C au maximum.

46. Procédé selon la revendication 44 ou 45, **caractérisé en ce que** la température de séchage se situe dans une deuxième étape de séchage, dans l'intervalle allant d'environ 35°C à environ 70°C au maximum.

47. Procédé selon les revendications 44 à 46, **caractérisé en ce que** la température de séchage se situe dans une troisième étape de séchage, dans l'intervalle allant d'environ 70°C à environ 110°C au maximum.

48. Procédé selon l'une des revendications 43 à 47, **caractérisé en ce que** la vitesse de chauffage s'élève à maximum 10 degré/minute pendant le séchage.

49. Procédé selon l'une des revendications 43 à 48, **caractérisé en ce que** la période de maintien de la température dans une étape de séchage s'élève à au moins environ 20 heures.

50. Procédé selon l'une des revendications précédentes, **caractérisé en ce que** la pyrolyse du corps vert est réalisée sous atmosphère d'azote.

51. Procédé selon la revendication 50, **caractérisé en ce que** la pyrolyse est réalisée sous une atmosphère d'azote à une pression d'au moins 1000 mbar.

52. Procédé selon l'une des revendications précédentes, **caractérisé en ce que** la pyrolyse du corps vert est réalisée sous une pression inférieure à 1000 mbar.

53. Procédé selon l'une des revendications précédentes, **caractérisé en ce que** la pyrolyse du corps vert est réalisée en une étape.

54. Procédé selon la revendication 53, **caractérisé en ce que**, lors de la pyrolyse en une étape, on réalise un chauffage allant de la température ambiante à environ 1700°C au maximum.

55. Procédé selon la revendication 53 ou 54, **caractérisé en ce que** la pyrolyse en une étape est réalisée pendant une période totale non supérieure à 120 heures.

56. Procédé selon l'une des revendications 1 à 52, **caractérisé en ce que** la pyrolyse du corps vert est réalisée au en moins deux étapes.

57. Procédé selon la revendication 56, **caractérisé en ce que** dans une première étape de pyrolyse, on réalise un chauffage allant de la température ambiante à environ 900°C au maximum.

58. Procédé selon la revendication 57, **caractérisé en ce qu'**après la première étape de pyrolyse, on réalise un refroidissement jusqu'à la température ambiante.

59. Procédé selon la revendication 57 ou 58, **caractérisé en ce que** la pyrolyse est réalisée, pendant la première étape de pyrolyse, pendant une période totale non supérieure à 120 heures.

60. Procédé selon l'une des revendications 56 à 59, **caractérisé en ce que** la pyrolyse comprend dans une deuxième étape de pyrolyse, un traitement thermique allant de la température ambiante à 1700°C au maximum.

61. Procédé selon l'une des revendications 56 à 60, **caractérisé en ce que** la pyrolyse est réalisée dans une deuxième étape de pyrolyse, à une pression allant d'environ 0,1 mbar à environ 10 mbar.

62. Procédé selon l'une des revendications 56 à 61, **caractérisé en ce qu'**après la deuxième étape de pyrolyse, on effectue un refroidissement jusqu'à la température ambiante.

63. Procédé selon l'une des revendications précédentes, **caractérisé en ce que** le corps carboné à pores ouverts présente une porosité qui se situe dans l'intervalle allant d'environ 30% en volume à environ 80% en volume.

64. Procédé selon la revendication 63, **caractérisé en ce que** le corps carboné à pores ouverts présente une porosité qui se situe dans l'intervalle allant d'environ 35% en volume à environ 70% en volume.

65. Procédé selon l'une des revendications précédentes, **caractérisé en ce que** le corps carboné présente une porosité essentiellement isotrope.

66. Procédé selon l'une des revendications précédentes, **caractérisé en ce que** le corps carboné présente des propriétés d'infiltration de matériaux comprenant du silicium, essentiellement indépendantes de la direction.

67. Procédé selon l'une des revendications précédentes, **caractérisé en ce que** le corps carboné est préparé avec une forme proche des contours finaux.

68. Procédé selon l'une des revendications 1 à 66, **caractérisé en ce que** le corps carboné est préparé sous forme d'une forme partielle d'une forme proche des contours finaux.

69. Procédé selon l'une des revendications précédentes, **caractérisé en ce que** la siliciation est réalisée sous forme d'une siliciation liquide.

70. Procédé selon la revendication 69, **caractérisé en ce que** la température se situe au-delà de 1400°C lors de la siliciation.

71. Procédé selon la revendication 69 ou 70, **caractérisé en ce que** la pression d'azote lors de la siliciation se situe dans l'intervalle allant d'environ 0,1 mbar à environ 10 mbar.

72. Procédé selon l'une des revendications 69 à 71, **caractérisé en ce que** la température maximale lors de la siliciation est maintenue pendant jusqu'à 2 heures.

73. Procédé selon l'une des revendications 69 à 72, **caractérisé en ce que** lors de la siliciation, on fournit au moins environ 200% de silicium par rapport à la masse du corps carboné.

74. Procédé selon l'une des revendications 69 à 73, **caractérisé en ce que** lors de la siliciation, on met en oeuvre un granulé de silicium dont la granulométrie se situe dans l'intervalle allant d'environ 0,1 mm à environ 10 mm.

75. Procédé selon l'une des revendications précédentes, **caractérisé en ce que** le corps carboné silicié est préparé avec une structure céramique de carbure de silicium essentiellement isotrope.

76. Procédé selon l'une des revendications précédentes, **caractérisé en ce que** le corps carboné silicié est préparé comme une structure céramique de carbure comprenant du silicium, en particulier une structure céramique de carbure de silicium, essentiellement homogène, exempte de gradient, en particulier isotrope.

77. Procédé selon la revendication 76, **caractérisé en ce que** la structure céramique de carbure de silicium est préparée avec une masse volumique de plus de 2,9 g/cm³.

78. Procédé selon la revendication 77, **caractérisé en ce que** la masse volumique est supérieure à 3 g/cm³.
